# EUROPEAN PATENT APPLICATION

(11) **EP 4 319 046 A1**
(43) Date of publication of application: **07.02.2024**
(21) Application number: 22794396.6
(22) Date of filing: 17.03.2022
(51) Int. Cl.: H04L 9/40, H04L 5/00, H04L 41/08, H04W 36/00

(54) **SECURITY CONFIGURATION METHOD AND COMMUNICATION APPARATUS IN SWITCHING SCENE**

(30) Priority: 29.04.2021 CN 202110489097
(71) Applicant: Huawei Technologies Co., Ltd., Longgang Shenzhen, Guangdong 518129 (CN)
(72) Inventor: WU, Yizhuang, Shenzhen, Guangdong 518129 (CN)
(74) Representative: Pfenning, Meinig & Partner mbB
(86) International application number: PCT/CN2022/081556
(87) International publication number: WO 2022/227919

(57) **Abstract**

A security configuration method in a handover scenario and a communication apparatus are provided. The method is used to improve communication security, and includes: A target access network node receives a first message including first information. The first message indicates a terminal device to be handed over from a source access network node to the target access network node, and the first information indicates to use a user plane security configuration that is of a data radio bearer and that is the same as that of a data radio bearer of the source access network node. The target access network node sends a response message of the first message. The response message includes second information, the second information indicates a user plane security configuration of a second data radio bearer of the target access network node, and the user plane security configuration of the second data radio bearer of the target access network node is the same as a user plane security configuration of a first data radio bearer of the source access network node.

## Description

This application claims priority to Chinese Patent Application No. 202110489097.7, filed with the China National Intellectual Property Administration on April 29, 2021 and entitled "SECURITY CONFIGURATION METHOD IN HANDOVER SCENARIO AND COMMUNICATION APPARATUS", which is incorporated herein by reference in its entirety.

### TECHNICAL FIELD

This application relates to the communication field, and more specifically, to a security configuration method in a handover scenario and a communication apparatus.

### BACKGROUND

In a mobile communication system, a dual active protocol stack (dual active protocol stack, DAPS)-based handover procedure is proposed to meet reliability of data packet transmission and an extremely low handover interruption delay in a handover process. In a DAPS-based handover, a source base station may activate a DAPS handover only for one or more data radio bearers (data radio bearers, DRBs). For a DRB on which DAPS handover activation is performed, before a terminal device receives a resource release request indicated by a target radio access network (radio access network, RAN) node, the terminal device continues to communicate a data packet with a source RAN node and the target RAN node at the same time, and the source RAN node and the target RAN node may transmit a same data packet. When the source RAN node and the target RAN node can transmit the same data packet, a security configuration manner in a current system has vulnerability, and data security has a potential risk.

### SUMMARY

Embodiments of this application provide a security configuration method in a handover scenario and a communication apparatus, to improve communication security.

According to a first aspect, a security configuration method in a handover scenario is provided. The method may be performed by an access network node or a module (for example, a chip) configured (or used) in an access network node. The following uses an example in which the method is performed by the access network node for description.

The method includes: A target access network node receives a first message. The first message indicates a terminal device to be handed over from a source access network node to the target access network node, the first message includes first information, and the first information indicates to use a user plane security configuration that is of a data radio bearer and that is the same as that of a data radio bearer of the source access network node. The target access network node sends a response message of the first message. The response message includes second information, the second information indicates a user plane security configuration of a second data radio bearer of the target access network node, and the user plane security configuration of the second data radio bearer of the target access network node is the same as that of a first data radio bearer of the source access node.

With reference to the first aspect, in some implementations of the first aspect, the second data radio bearer is a data radio bearer obtained after the first data radio bearer is handed over from the source access network node to the target access network node.

According to the foregoing solution, the target access network node determines, based on the first information, that the user plane security configuration used for the DRB is the same as the user plane security configuration of the DRB of the source RAN node. This can reduce a security risk caused by different security configurations of the data radio bearer when the target access network node and the source access network node transmit a same data packet, and improve data transmission security.

With reference to the first aspect, in some implementations of the first aspect, the first information includes identification information and a dual active protocol stack handover indication of the first data radio bearer, and the dual active protocol stack handover indication indicates the first data radio bearer to use dual active protocol stack handover.

According to the foregoing implementation, the source access network node may specifically, by using the dual active protocol stack handover indication, indicate that the first data radio bearer uses the dual active protocol handover, and implicitly indicate that the user plane security configuration used by the DRB is the same as the user plane security configuration of the DRB of the source access network node. This avoids adding new information overheads to the first message.

With reference to the first aspect, in some implementations of the first aspect, the first message includes the user plane security configuration of the first data radio bearer, and the method further includes: The target access network node determines, based on the dual active protocol stack handover indication, that the user plane security configuration of the second data radio bearer is the same as the user plane security configuration of the first data radio bearer. The target access network node configures, based on the user plane security configuration of the first data radio bearer, user plane security of the second data radio bearer, or configures user plane security of a data radio bearer in a protocol data unit session corresponding to the second data radio bearer.

Optionally, the user plane security of the data radio bearer includes ciphering (ciphering) protection and/or integrity protection (integrity protection).

Optionally, the user plane security configuration of the first data radio bearer includes that user plane security of the first data radio bearer is configured to be in an enabled state or a not enabled state. The enabled state may also be referred to as an active state, and the not enabled state may be referred to as an inactive state.

Optionally, the user plane security configuration of the first data radio bearer includes a ciphering protection enabling indication or a ciphering protection not enabling indication, and/or an integrity protection enabling indication or an integrity protection not enabling indication. Enabling may also be referred to as being activated, and not enabling may also be referred to as not being activated.

According to the foregoing implementation, the target access network node may specifically determine, based on the dual active protocol stack handover indication of the first data radio bearer, that the user plane security configuration used by the DRB is the same as the user plane security configuration of the DRB of the source access network node. When adding new information overheads to the first message is avoided, the target access network node and the source access network node reach a consensus on an implicit indication for the dual active protocol stack handover indication to use the user plane security configuration that is of the data radio bearer and that is the same as that of the data radio bearer of the source access network node.

With reference to the first aspect, in some implementations of the first aspect, the first information includes a user plane security activation state, and the user plane security activation state indicates a user plane security activation state of the first data radio bearer or a user plane security activation state of a protocol data unit session corresponding to the first data radio bearer.

Optionally, the user plane activation state includes that user plane security is in the enabled state or that user plane security is in the disabled state.

By way of example and not limitation, that the user plane activation state is the enabled state may include that ciphering protection is in the enabled state and/or integrity protection is in the enabled state; and that the user plane security activation state is the not enabled state may include that ciphering protection is in the not enabled state and/or integrity protection is in the not enabled state. Enabling may also be referred to as being activated, and not enabling may also be referred to as not being activated.

With reference to the first aspect, in some implementations of the first aspect, the method further includes:

The target access network node determines the user plane security configuration of the second data radio bearer based on the user plane security activation state.

According to the foregoing implementation, the source access network node indicates a user plane security activation state of a first DRB in the source access network node by using the user plane security activation state of the first message, so that the target access network node determines a user plane security configuration of a second DRB based on the user plane security activation state. In this way, that the user plane security configuration used by the target access network node for the second DRB is the same as the user plane security configuration used by the source access network node for the first DRB is implemented.

With reference to the first aspect, in some implementations of the first aspect, the first message includes the user plane security configuration of the first data radio bearer, and the method further includes: The target access network node compares the user plane security configuration of the second data radio bearer with the user plane security configuration of the first data radio bearer. If a comparison result is that the user plane security configuration of the second data radio bearer is different from the user plane security configuration of the first data radio bearer, the second information includes the user plane security configuration of the second data radio bearer; or if a comparison result is that the user plane security configuration of the second data radio bearer is the same as the user plane security configuration of the first data radio bearer, the second information indicates to use, for the second data radio bearer, a user plane security configuration that is the same as that of the first data radio bearer.

With reference to the first aspect, in some implementations of the first aspect, the first message includes a first user plane security policy, and the first user plane security policy is a user plane security policy of the first data radio bearer, or the first user plane security policy is a user plane security policy of the protocol data unit session corresponding to the first data radio bearer.

Optionally, the first user security policy may include user plane ciphering protection indication information and/or user plane integrity protection indication information. The user plane ciphering protection indication information indicates three possible values: required (required) to enable, preferred (preferred) to enable, or not needed (not needed) to enable user plane ciphering protection. The user plane integrity protection indication information indicates three possible values: required (required) to enable, preferred (preferred) to enable, or not needed (not needed) to enable the user plane integrity protection.

With reference to the first aspect, in some implementations of the first aspect, the first user plane security policy indicates that security protection is recommended to be used (or referred to as enabling).

According to the foregoing implementation, when the first user plane security policy indicates that security protection is recommended to be used, because the user plane security configuration of the DRB determined by the target access network node may be different from the user plane security configuration determined by the source access network node, the target access network node determines, based on the first information in the solution provided in this application, that the user plane security configuration used by the DRB is the same as the user plane security configuration of the DRB of the source access network node.

With reference to the first aspect, in some implementations of the first aspect, the second information indicates to use, for the second data radio bearer of the target access network node, the user plane security configuration that is the same as that of the first data radio bearer of the source access network node; or the second information includes the user plane security configuration of the second data radio bearer.

According to the foregoing implementation, the second information may indicate the user plane security configuration of the second data radio bearer in the foregoing manner, so that the terminal device may determine the user plane security configuration of the second data radio bearer obtained after obtaining the second information through the source access network node.

With reference to the first aspect, in some implementations of the first aspect, the method further includes: After the target access network node receives a radio resource control (radio resource control, RRC) reconfiguration complete message from the terminal device, the target access network node updates the user plane security configuration of the second data radio bearer according to a second user plane security policy. The second user plane security policy is a user plane security policy of the second data radio bearer of the target access network node or a user plane security policy of the protocol data unit session corresponding to the second data radio bearer.

According to the foregoing implementation, after the terminal device is handed over from the source access network node to the target access node, the target access network node may update the user plane security configuration of the second data radio bearer, to ensure data security based on a latest policy.

With reference to the first aspect, in some implementations of the first aspect, the method further includes: The target access network node sends an updated user plane security configuration of the second data radio bearer of the target access network node to the terminal device.

With reference to the first aspect, in some implementations of the first aspect, the updated user plane security configuration is carried in a resource release message.

With reference to the first aspect, in some implementations of the first aspect, the first message is from the source access network node, and that the target access network node sends a response message includes: The target access network node sends the response message to the source access network node; or the first message is from a core network node, and the target access network node sends a response message includes: The target access network node sends the response message to the core network node.

According to a second aspect, a security configuration method in a handover scenario is provided. The method may be performed by an access network node or a module (for example, a chip) configured (or used) in an access network node. The following uses an example in which the method is performed by the access network node for description.

The method includes: A source access network node sends a first message. The first message indicates a terminal device to be handed over from the source access network node to a target access network node, the first message includes first information, and the first information indicates to use a user plane security configuration that is of a data radio bearer and that is the same as that of a data radio bearer of the source access network node. The source access network node receives a response message of the first message. The response message includes second information, the second information indicates a user plane security configuration of a second data radio bearer of the target access network node, and the user plane security configuration of the second data radio bearer of the target access network node is the same as that of a first data radio bearer of the source access node. With reference to the second aspect, in some implementations of the second aspect, the second data radio bearer is a data radio bearer obtained after the first data radio bearer is handed over from the source access network node to the target access network node.

According to the foregoing solution, the source access network node may notify, by using the first information, the target access network node to use the user plane security configuration that is the same as that of the DRB of the source access network node, so that the target access network node can use, based on the received first information, the user plane security configuration that is the same as that of the DRB of the source access network node. This can reduce a security risk caused by different security configurations of the data radio bearer when the target access network node and the source access network node transmit a same data packet, and improve data transmission security.

With reference to the second aspect, in some implementations of the second aspect, the method further includes: The source access network node sends a second message to the terminal device. The second message indicates the terminal device to be handed over from the source access network node to the target access network node, and the second message includes the second information.

According to the foregoing implementation, the source access network node forwards the second information from the target access network node to the terminal device, so that the terminal device can determine, based on the second information, the user plane security configuration of the DRB used by the target access network node, and the terminal device and the target access network node reach a consensus, to ensure data transmission reliability.

With reference to the second aspect, in some implementations of the second aspect, the first information includes identification information and a dual active protocol stack handover indication of the first data radio bearer, and the dual active protocol stack handover indication indicates the first data radio bearer to use dual active protocol stack handover.

According to the foregoing implementation, the source access network node may specifically, by using the dual active protocol stack handover indication, indicate that the first data radio bearer uses the dual active protocol handover, and implicitly indicate that the user plane security configuration used by the DRB is the same as the user plane security configuration of the DRB of the source access network node. This avoids adding new information overheads to the first message.

With reference to the second aspect, in some implementations of the second aspect, the first information includes a user plane security activation state, and the user plane security activation state indicates a user plane security activation state of the first data radio bearer or a user plane security activation state of a protocol data unit session corresponding to the first data radio bearer.

According to the foregoing implementation, the source access network node indicates a user plane security activation state of a first DRB in the source access network node by using the user plane security activation state of the first message, so that the target access network node determines a user plane security configuration of a second DRB based on the user plane security activation state. In this way, that the user plane security configuration used by the target access network node for the second DRB is the same as the user plane security configuration used by the source access network node for the first DRB is implemented.

With reference to the second aspect, in some implementations of the second aspect, when it is determined that the data radio bearer uses the dual active protocol stack handover, the source access network node determines that the first message includes the first information.

With reference to the second aspect, in some implementations of the second aspect, the first message includes the user plane security configuration of the first data radio bearer, and/or the first message includes a first user plane security policy. The first user plane security policy is a user plane security policy of the first data radio bearer or a user plane security policy of the protocol data unit session corresponding to the first data radio bearer.

With reference to the second aspect, in some implementations of the second aspect, the first user plane security policy indicates that security protection is recommended to be used. With reference to the second aspect, in some implementations of the second aspect, the method further includes: When the first user plane security policy indicates that the security protection is recommended to be used, the source access network node determines that the first message includes the first information. The first user plane security policy is the user plane security policy of the first data radio bearer or the user plane security policy of the protocol data unit session corresponding to the first data radio bearer.

According to the foregoing implementation, when the first user plane security policy indicates that security protection is recommended to be used, because the user plane security configuration of the DRB determined by the target access network node may be different from the user plane security configuration determined by the source access network node, the source access network node notifies, by using the first information in the solution provided in this application, that the target access network node uses the user plane security configuration that is of the DRB and that is the same as that of the DRB of the source access network node.

With reference to the second aspect, in some implementations of the second aspect, the second information indicates to use, for the second data radio bearer of the target access network node, a user plane security configuration that is the same as that of the first data radio bearer of the source access network node; or the second information includes the user plane security configuration of the second data radio bearer.

With reference to the second aspect, in some implementations of the second aspect, the response message is from the target access network node, and that a source access network node sends a first message includes: The source access network node sends the first message to the target access network node; or the response message is from a core network node, and that a source access network node sends a first message includes: The source access network node sends the first message to the core network node.

According to a third aspect, a security configuration method in a handover scenario is provided. The method may be performed by a terminal device or a module (for example, a chip) configured (or used) in a terminal device. The following uses an example in which the method is performed by the terminal device for description.

The method includes: A terminal device receives a radio resource configuration message from a source access network device. The radio resource configuration message includes second information, the second information indicates a user plane security configuration of a second data radio bearer of a target access network node, and the user plane security configuration of the second data radio bearer is the same as that of a first data radio bearer of the source access node. The terminal device receives a resource release message from the target access network node. The resource release message includes third information, and the third information indicates an updated user plane security configuration of the second data radio bearer of the target access network node.

With reference to the third aspect, in some implementations of the third aspect, the second data radio bearer is a data radio bearer obtained after the first data radio bearer is handed over from the source access network node to the target access network node.

According to the foregoing solution, in a handover process of the terminal device, the target access network node and the source access network node may use, for the DRB, a same user plane security configuration. This can reduce a security risk caused by different security configurations of the data radio bearer when the target access network node and the source access network node transmit a same data packet to the terminal device, and improve data transmission security. Further, after completing the handover, the terminal device may obtain the updated user plane security configuration by using the resource release message, to ensure data security based on a latest policy.

With reference to the third aspect, in some implementations of the third aspect, the second information indicates to use, for the second data radio bearer of the target access network node, a user plane security configuration that is the same as that of the first data radio bearer of the source access network node; or the second information includes the user plane security configuration of the second data radio bearer.

According to a fourth aspect, a communication apparatus is provided. In a design, the apparatus may include modules for performing the method/operations/steps/actions in a one-to-one correspondence described in the first aspect. The module may be a hardware circuit, may be software, or may be implemented by using a combination of a hardware circuit and software. In a design, the apparatus includes: a transceiver unit, configured to receive a first message, where the first message indicates a terminal device to be handed over from a source access network node to a target access network node, the first message includes first information, and the first information indicates to use a user plane security configuration that is of a data radio bearer and that is the same as that of a data radio bearer of the source access network node; a processing unit, configured to determine that a user plane security configuration of a second data radio bearer of the target access network node is the same as a user plane security configuration of a first data radio bearer of the source access node; and a transceiver unit is configured to send, by the target access network node, a response message of the first message, where the response message includes second information, and the second information indicates the user plane security configuration of the second data radio bearer.

With reference to the fourth aspect, in some implementations of the fourth aspect, the second data radio bearer is a data radio bearer obtained after the first data radio bearer is handed over from the source access network node to the target access network node.

With reference to the fourth aspect, in some implementations of the fourth aspect, the first information includes identification information and a dual active protocol stack handover indication of the first data radio bearer, and the dual active protocol stack handover indication indicates the first data radio bearer to use dual active protocol stack handover.

With reference to the fourth aspect, in some implementations of the fourth aspect, the first message includes the user plane security configuration of the first data radio bearer, and the processing unit is further configured to determine, based on the dual active protocol stack handover indication, that the user plane security configuration of the second data radio bearer is the same as the user plane security configuration of the first data radio bearer. The processing unit is further configured to configure, based on the user plane security configuration of the first data radio bearer, user plane security of the second data radio bearer, or configure user plane security of a data radio bearer in a protocol data unit session corresponding to the second data radio bearer.

With reference to the fourth aspect, in some implementations of the fourth aspect, the first information includes a user plane security activation state, and the user plane security activation state indicates a user plane security activation state of the first data radio bearer or a user plane security activation state of a protocol data unit session corresponding to the first data radio bearer.

With reference to the fourth aspect, in some implementations of the fourth aspect, the processing unit is further configured to determine the user plane security configuration of the second data radio bearer based on the user plane security activation state.

With reference to the fourth aspect, in some implementations of the fourth aspect, the first message includes the user plane security configuration of the first data radio bearer, and the processing unit is further configured to compare the user plane security configuration of the second data radio bearer with the user plane security configuration of the first data radio bearer. If a comparison result is that the user plane security configuration of the second data radio bearer is different from the user plane security configuration of the first data radio bearer, the second information includes the user plane security configuration of the second data radio bearer; or if a comparison result is that the user plane security configuration of the second data radio bearer is the same as the user plane security configuration of the first data radio bearer, the second information indicates to use, for the second data radio bearer, a user plane security configuration that is the same as that of the first data radio bearer.

With reference to the fourth aspect, in some implementations of the fourth aspect, the first message includes a first user plane security policy, and the first user plane security policy is a user plane security policy of the first data radio bearer, or the first user plane security policy is a user plane security policy of the protocol data unit session corresponding to the first data radio bearer.

With reference to the fourth aspect, in some implementations of the fourth aspect, the first user plane security policy indicates that security protection is recommended to be used.

With reference to the fourth aspect, in some implementations of the fourth aspect, the second information indicates to use, for the second data radio bearer of the target access network node, the user plane security configuration that is the same as that of the first data radio bearer of the source access network node; or the second information includes the user plane security configuration of the second data radio bearer.

With reference to the fourth aspect, in some implementations of the fourth aspect, the processing unit is further configured to: after the target access network node receives a radio resource control reconfiguration complete message from the terminal device, update the user plane security configuration of the second data radio bearer according to a second user plane security policy. The second user plane security policy is a user plane security policy of the second data radio bearer of the target access network node or a user plane security policy of the protocol data unit session corresponding to the second data radio bearer.

With reference to the fourth aspect, in some implementations of the fourth aspect, the transceiver unit is further configured to send an updated user plane security configuration of the second data radio bearer of the target access network node to the terminal device.

With reference to the fourth aspect, in some implementations of the fourth aspect, the updated user plane security configuration is carried in a resource release message.

With reference to the fourth aspect, in some implementations of the fourth aspect, the first message is from the source access network node; the transceiver unit is specifically configured to send the response message to the source access network node; or the first message is from a core network node; and the transceiver unit is specifically configured to send the response message to the core network node.

According to a fifth aspect, a communication apparatus is provided. In a design, the apparatus may include modules for performing the method/operations/steps/actions in a one-to-one correspondence described in the second aspect. The module may be a hardware circuit, may be software, or may be implemented by using a combination of a hardware circuit and software. In a design, the apparatus includes: a processing unit, configured to determine a first message, where the first message indicates a terminal device to be handed over from a source access network node to a target access network node, the first message includes first information, and the first information indicates to use a user plane security configuration that is of a data radio bearer and that is the same as that of a data radio bearer of the source access network node; and a transceiver unit, configured to send the first message. The transceiver unit is further configured to receive a response message of the first message. The response message includes second information, the second information indicates a user plane security configuration of a second data radio bearer of the target access network node, and the user plane security configuration of the second data radio bearer of the target access network node is the same as a user plane security configuration of a first data radio bearer of the source access node.

With reference to the fifth aspect, in some implementations of the fifth aspect, the second data radio bearer is a data radio bearer obtained after the first data radio bearer is handed over from the source access network node to the target access network node.

With reference to the fifth aspect, in some implementations of the fifth aspect, the transceiver unit is further configured to send a second message to the terminal device. The second message indicates the terminal device to be handed over from the source access network node to the target access network node, and the second message includes the second information.

With reference to the fifth aspect, in some implementations of the fifth aspect, the first information includes identification information and a dual active protocol stack handover indication of the first data radio bearer, and the dual active protocol stack handover indication indicates the first data radio bearer to use dual active protocol stack handover.

With reference to the fifth aspect, in some implementations of the fifth aspect, the first information includes a user plane security activation state, and the user plane security activation state indicates a user plane security activation state of the first data radio bearer or a user plane security activation state of a protocol data unit session corresponding to the first data radio bearer.

With reference to the fifth aspect, in some implementations of the fifth aspect, the processing unit is further configured to: when it is determined that the data radio bearer uses the dual active protocol stack handover, determine, that the first message includes the first information.

With reference to the fifth aspect, in some implementations of the fifth aspect, the first message includes the user plane security configuration of the first data radio bearer, and/or the first message includes a first user plane security policy. The first user plane security policy is a user plane security policy of the first data radio bearer or a user plane security policy of the protocol data unit session corresponding to the first data radio bearer.

With reference to the fifth aspect, in some implementations of the fifth aspect, the first user plane security policy indicates that security protection is recommended to be used.

With reference to the fifth aspect, in some implementations of the fifth aspect, the processing unit is further configured to: when the first user plane security policy indicates that the security protection is recommended to be used, determine, that the first message includes the first information. The first user plane security policy is the user plane security policy of the first data radio bearer or the user plane security policy of the protocol data unit session corresponding to the first data radio bearer.

With reference to the fifth aspect, in some implementations of the fifth aspect, the second information indicates to use, for the second data radio bearer of the target access network node, a user plane security configuration that is the same as that of the first data radio bearer of the source access network node; or
the second information includes the user plane security configuration of the second data radio bearer.

With reference to the fifth aspect, in some implementations of the fifth aspect, the response message is from the target access network node, and the transceiver unit is specifically configured to send the first message to the target access network node; or the response message is from a core network node, and the transceiver unit is specifically configured to send the first message to the core network node.

According to a sixth aspect, a communication apparatus is provided. In a design, the apparatus may include modules for performing the method/operations/steps/actions in a one-to-one correspondence described in the third aspect. The module may be a hardware circuit, may be software, or may be implemented by using a combination of a hardware circuit and software. In a design, the apparatus includes: a transceiver unit, configured to receive a radio resource configuration message from a source access network device, where the radio resource configuration message includes second information, the second information indicates a user plane security configuration of a second data radio bearer of a target access network node, and the user plane security configuration of the second data radio bearer is the same as a user plane security configuration of a first data radio bearer of the source access node; and a processing unit, configured to determine that the user plane security configuration of the second data radio bearer is the same as that of the first data radio bearer of the source access node. The transceiver unit is further configured to receive a resource release message from the target access network node. The resource release message includes third information, and the third information indicates an updated user plane security configuration of the data radio bearer of the target access network node.

With reference to the sixth aspect, in some implementations of the sixth aspect, the second information indicates to use, for the second data radio bearer of the target access network node, a user plane security configuration that is the same as that of the first data radio bearer of the source access network node; or the second information includes the user plane security configuration of the second data radio bearer.

According to a seventh aspect, a communication apparatus is provided, and includes a processor. The processor may implement the method according to any one of the first aspect and the possible implementations of the first aspect. Optionally, the communication apparatus further includes a memory. The processor is coupled to the memory, and may be configured to execute instructions in the memory, to implement the method according to any one of the first aspect or the possible implementations of the first aspect. Optionally, the communication apparatus further includes a communication interface, and the processor is coupled to the communication interface. In embodiments of this application, the communication interface may be a transceiver, a pin, a circuit, a bus, a module, or a communication interface of another type. This is not limited.

In an implementation, the communication apparatus is a target access network node. When the communication apparatus is the target access network node, the communication interface may be a transceiver or an input/output interface.

In another implementation, the communication apparatus is a chip configured in the target access network node. When the communication apparatus is the chip configured in the target access network node, the communication interface may be the input/output interface.

According to an eighth aspect, a communication apparatus is provided, and includes a processor. The processor may implement the method according to any one of the second aspect and the possible implementations of the second aspect. Optionally, the communication apparatus further includes a memory. The processor is coupled to the memory, and may be configured to execute instructions in the memory, to implement the method according to any one of the second aspect or the possible implementations of the second aspect. Optionally, the communication apparatus further includes a communication interface, and the processor is coupled to the communication interface. In embodiments of this application, the communication interface may be a transceiver, a pin, a circuit, a bus, a module, or a communication interface of another type. This is not limited.

In an implementation, the communication apparatus is a source access network node. When the communication apparatus is the source access network node, the communication interface may be a transceiver or an input/output interface.

In another implementation, the communication apparatus is a chip configured in the source access network node. When the communication apparatus is the chip configured in the source access network node, the communication interface may be the input/output interface.

Optionally, the transceiver may be a transceiver circuit. Optionally, the input/output interface may be an input/output circuit.

According to a ninth aspect, a communication apparatus is provided, and includes a processor. The processor may implement the method according to any one of the third aspect and the possible implementations of the third aspect. Optionally, the communication apparatus further includes a memory. The processor is coupled to the memory, and may be configured to execute instructions in the memory, to implement the method according to any one of the third aspect or the possible implementations of the third aspect. Optionally, the communication apparatus further includes a communication interface, and the processor is coupled to the communication interface. In embodiments of this application, the communication interface may be a transceiver, a pin, a circuit, a bus, a module, or a communication interface of another type. This is not limited.

In an implementation, the communication apparatus is a terminal device. When the communication apparatus is the terminal device, the communication interface may be a transceiver or an input/output interface.

In another implementation, the communication apparatus is a chip configured in the terminal device. When the communication apparatus is the chip configured in the terminal device, the communication interface may be an input/output interface.

Optionally, the transceiver may be a transceiver circuit. Optionally, the input/output interface may be an input/output circuit.

According to a tenth aspect, a processor is provided, and includes an input circuit, an output circuit, and a processing circuit. The processing circuit is configured to: receive a signal by using the input circuit, and transmit the signal by using the output circuit, so that the processor performs the method according to any one of the first aspect to the third aspect and the possible implementations of the first aspect to the third aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit. The circuit is used as the input circuit and the output circuit at different moments. Specific implementations of the processor and the various circuits are not limited in embodiments of this application.

According to an eleventh aspect, a computer program product is provided. The computer program product includes a computer program (which may also be referred to as code or instructions). When the computer program runs, a computer is enabled to perform the method according to any one of the first aspect to the third aspect and the possible implementations of the first aspect to the third aspect.

According to a twelfth aspect, a computer-readable storage medium is provided. The computer-readable storage medium stores a computer program (which may also be referred to as code or instructions). When the computer program is run on a computer, the computer is enabled to perform the method according to any one of the first aspect to the third aspect and the possible implementations of the first aspect to the third aspect.

According to a thirteenth aspect, a communication system is provided, and includes at least two nodes in the foregoing terminal device, source access network node, target access network node, or core network node.

### BRIEF DESCRIPTION OF DRAWINGS

FIG. 1 is a schematic block diagram of a communication system according to an embodiment of this application;
FIG. 1A is another schematic block diagram of a communication system according to an embodiment of this application;
FIG. 2 is a schematic flowchart of user plane security activation according to an embodiment of this application;
FIG. 3 is a schematic diagram of DRB data packet transmission by using a DAPS handover according to an embodiment of this application;
FIG. 4 is a schematic flowchart of a communication method according to an embodiment of this application;
FIG. 5 is a schematic flowchart of a security configuration method in an Xn interface-based handover scenario according to an embodiment of this application;
FIG. 6A and FIG. 6B are another schematic flowchart of a security configuration method in an Xn interface-based handover scenario according to an embodiment of this application;
FIG. 7 is a schematic flowchart of a security configuration method in an N2 interface-based handover scenario according to an embodiment of this application;
FIG. 8A and FIG. 8B are another schematic flowchart of a security configuration method in an N2 interface-based handover scenario according to an embodiment of this application;
FIG. 9 is a schematic block diagram of an example of a communication apparatus according to an embodiment of this application;
FIG. 10 is a schematic diagram of a structure of an example of a terminal device according to an embodiment of this application;
FIG. 11 is a schematic diagram of a structure of an example of an access network device according to an embodiment of this application; and
FIG. 12 is a schematic diagram of a structure of an example of a communication device according to an embodiment of this application.

### DESCRIPTION OF EMBODIMENTS

The technical solutions provided in embodiments of this application may be applied to communication between communication devices. The communication between the communication devices may include communication between a network device and a terminal device, communication between network devices, and/or communication between terminal devices. In embodiments of this application, the term "communication" may also be described as "transmission", "information transmission", "signal transmission", or the like. The transmission may include sending and/or receiving. Communication between a network device and a terminal device is used as an example to describe the technical solutions in embodiments of this application. A person skilled in the art may also use the technical solutions to other communication between a scheduling entity and a subordinate entity, for example, communication between a macro base station and a micro base station, for example, communication between a first terminal device and a second terminal device. The scheduling entity may allocate a radio resource such as an air interface resource to the subordinate entity. The air interface resource includes one or more of the following resources: a time domain resource, a frequency domain resource, a code resource, and a spatial resource.

In embodiments of this application, the communication between the network device and the terminal device includes: An access network device sends a downlink signal to the terminal device, and/or the terminal device sends an uplink signal to the access network device. The signal may also be replaced with information, data, or the like.

The terminal device in embodiments of this application may also be referred to as a terminal. The terminal may be a device having a wireless transceiver function. The terminal may be deployed on land, including an indoor device, an outdoor device, a handheld device, and/or a vehicle-mounted device, may be deployed on a water surface (for example, on a ship), or may be deployed in air (for example, on an airplane, a balloon, or a satellite). The terminal device may be user equipment (user equipment, UE). The UE includes a handheld device, vehicle-mounted device, wearable device, or computing device with a wireless communication function. For example, the UE may be a mobile phone (mobile phone), a tablet computer, or a computer having a wireless transceiver function. The terminal device may alternatively be a virtual reality (virtual reality, VR) terminal device, an augmented reality (augmented reality, AR) terminal device, a wireless terminal in industrial control, a wireless terminal in unmanned driving, a wireless terminal in telemedicine, a wireless terminal in a smart grid, a wireless terminal in a smart city (smart city), a wireless terminal in a smart home (smart home), and/or the like.

The access network node in embodiment of this application may be a RAN (radio access network, RAN) device, including a base station (base station, BS), and may be a device deployed in a wireless access network for wireless communication with a terminal device. The base station may be in a plurality of forms, for example, a macro base station, a micro base station, a relay station, an access point, or the like. The base station in embodiments of this application may be a next generation access network (next generation-RAN, NG-RAN) device in a 5G system, a base station in a long term evolution (long term evolution, LTE) system, or a base station in another system. This is not limited. The NG-RAN device in the 5G system may also be referred to as a transmission reception point (transmission reception point, TRP) or a next generation NodeB (generation NodeB, gNB or gNodeB). The base station may be an integrated base station, or may be a base station that is separated into a plurality of network elements. This is not limited. For example, the base station is a base station in which a central unit (central unit, CU) and a distributed unit (distributed unit, DU) are separated, that is, the base station includes the CU and the DU.

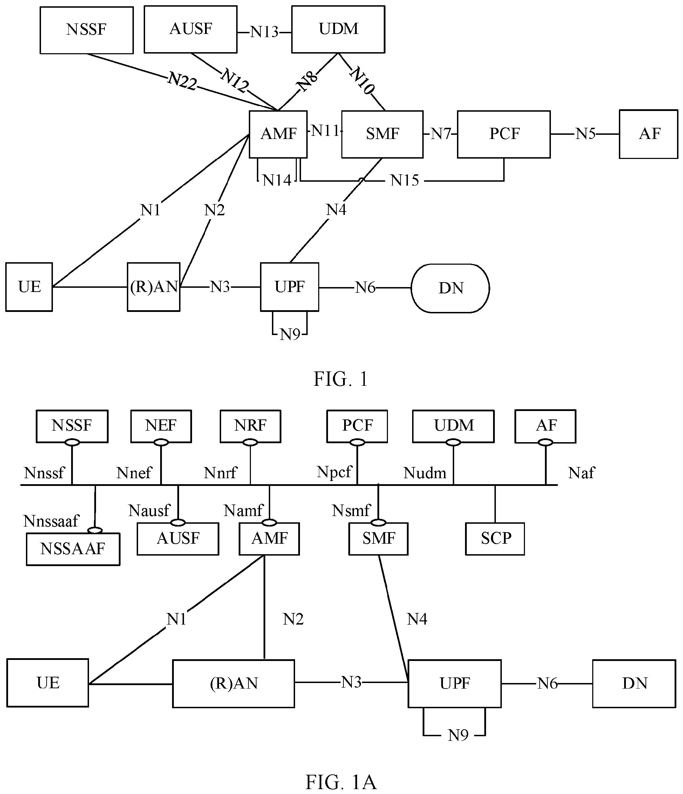

FIG. 1 is a schematic diagram of a system architecture 100 applicable to embodiments of this application.

A 5G core network (5G core, 5GC, or new generation core, NGC) includes a plurality of functional units such as an access and mobility management function (access and mobility management function, AMF) node, a session management function (session management function, SMF) node, a user plane function (user plane function, UPF) node, an authentication server function (authentication server function, AUSF) node, a policy control function (policy control function, PCF) node, an application function (application function, AF) node, a unified data management function (unified data management, UDM) node, a network slice selection function (network slice selection function, NSSF) node, and the like in FIG. 1.

The AMF node is mainly responsible for services such as mobility management, access management, and the like. The SMF node is mainly responsible for session management, address management and assignment of a terminal device, a dynamic host configuration protocol function, selection and control of a user plane function, and the like. The UPF is mainly responsible for functions related to external connection to a data network (data network, DN), user plane data packet routing and forwarding, packet filtering, quality of service (quality of service, QoS) control, and the like. The UDM is mainly responsible for storing subscription data, a credential (credential), a permanent identifier (SUPI, Subscriber Permanent Identifier), and the like of a subscribed terminal device in a network, and a service-based interface provided is Nudm. The data may be used for authentication and authorization when the terminal device accesses a carrier network. The AUSF is mainly responsible for a function of authenticating the terminal device. The PCF node is mainly responsible for providing a unified policy framework for network behavior management, providing a policy rule of a control plane function, obtaining registration information related to policy decision, and the like, and a service-based interface provided is Npcf. It should be noted that these functional units may independently operate, or may be combined to implement some control functions, for example, access control and mobility management functions such as access authentication, security encryption, location registration, and the like of the terminal device, and session management functions such as establishment, release, and change of a user plane transmission path.

As shown in FIG. 1, the functional units in the 5GC may communicate with each other through a next generation (next generation, NG) network interface. For example, the UE may transmit a control plane message to the AMF node through an NG interface 1 (N1 for short). The RAN node may establish a user plane data transmission channel with the UPF through an NG interface 3 (N3 for short). The RAN node may establish a control plane signaling connection to the AMF node through an NG interface 2 (N2 for short). The UPF may exchange information with the SMF node through an NG interface 4 (N4 for short). The UPF may exchange user plane data with the data network DN through an NG interface 6 (N6 for short). The AMF node may exchange information with the SMF node through an NG interface 11 (N11 for short). The SMF node may exchange information with the PCF node through an NG interface 7 (N7 for short). The AMF node may exchange information with the AUSF through an NG interface 12 (N12 for short). Notably, FIG. 1 is merely an example diagram of an architecture. In addition to the functional units in FIG. 1, the network architecture may further include another functional unit.

Further, the 5G system architecture may further use a service-based interface. For example, as shown in FIG. 1A, the NSSF may select a group of network slice instances for the UE, determine allowed slice selection assistance information (slice selection assistance information, NSSAI), and the like. A service-based interface provided by the NSSF is Nnssf. The network capability exposure function (network exposure function, NEF) can expose network capabilities and events, obtain external application information from the application layer function (application function, AF), and store the information used for external exposure in a unified data repository (unified data repository, UDR). A service-based interface provided by the NEF is Nnef. The network repository function (network repository function, NRF) provides service registration, discovery, and authorization, and maintains available network function (network function, NF) instance information. A service-based interface provided by the NRF is the Nnrf interface. The AUSF can provide unified access authentication services for 3GPP and non-3GPP. A service-based interface provided by the AUSF is Nausf. The network slice specific authentication and authorization function (network slice specific authentication and authorization function, NSSAAF) authenticates and authorizes the UE to access specific slices, preventing unauthorized the UE from accessing slice services or resources. A service-based interface provided by NSSAAF is Nnssaaf.

In a 5G system, two RAN nodes may directly interact with each other, and communicate through the Xn interface; or two RAN nodes cannot directly interact with each other, and communicate through the AMF, that is, indirectly interact with each other through the N2 interface. In a radio access scenario, the two terms, access network (access network, AN) and radio access network RAN, may not be distinguished.

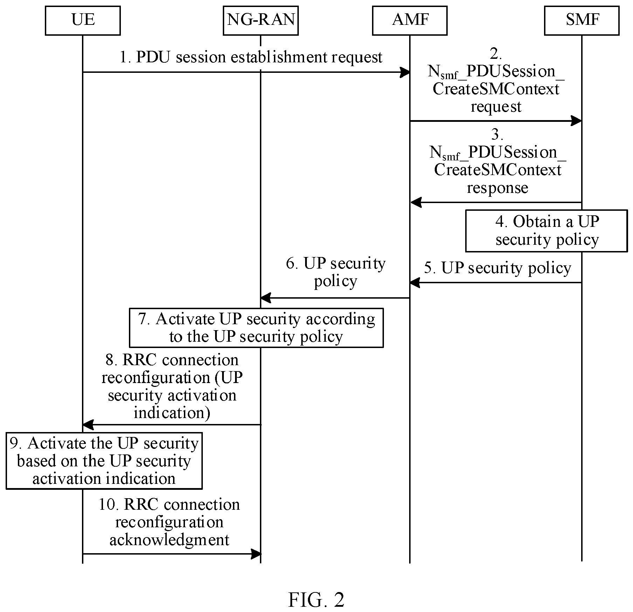

The following describes technologies or terms related to this application.
I. DAPS handover (DAPS handover)
   A handover process, in which after receiving a radio resource control (radio resource control, RRC) message used to indicate handover, a terminal device is allowed to maintain a connection to a source access network node until the terminal device successfully accesses a target access network node and releases a source cell.
II. DAPS bearer (DAPS bearer)
   The DAPS bearer refers to that a radio protocol of the bearer is located at both a source base station and a target base station in a DAPS handover process, that is, the bearer can use both resources of the source base station and resources of the target base station.
III. User plane security policy
   The user plane security policy includes user plane ciphering protection indication information and user plane integrity protection indication information. The user plane ciphering protection indication information indicates three possible values, which are respectively required (required), preferred (preferred), or not needed (not needed). The user plane integrity protection indication information indicates three possible values, which are respectively not needed, preferred, and required, not needed indicates that user plane security does not need to be activated, preferred indicates that user plane security may be activated or may not be activated, and required indicates that user plane security needs to be activated. The foregoing three possible values may be each indicated by using two bits (bit). For example, 00 indicates that activation is not needed, 01 indicates that activation may be or may not be performed, and 11 indicates that activation is needed. A specific manner in which the user plane ciphering protection indication information and the user plane integrity protection indication information indicate the three possible values is not limited in the embodiments of this application.
IV. User plane (user plane, UP) security activation
   The following uses FIG. 2 as an example to briefly describe an example in which a RAN activates UP security in a protocol data unit (protocol data unit, PDU) session establishment process. As shown in FIG. 2, a UP security activation process includes but is not limited to the following steps.
   1. The UE sends a non-access stratum (non-access stratum, NAS) message to an AMF through an NG-RAN. The NAS message includes an N1 session management (session management, SM) container, the container includes a PDU session establishment request, and the request includes information such as a PDU session identifier (identifier, ID).
   2. The AMF generates, based on the NAS message, a PDU session establishment request message sent to an SMF. A service-based message corresponding to the PDU session establishment request message may be an N_{smf}_PDUSession_CreateSMContext request (N_{smf}_PDUSession_CreateSMContext request) message. The message includes the N1 SM container.
   3. If the SMF can process the received request, the SMF sends a response message to the AMF. The response message may be an N_{smf}_PDUSession_CreateSMContext response (N_{smf}_PDUSession_CreateSMContext response) message.
   4. The SMF obtains a user plane security policy.
      The SMF may obtain the user plane security policy from a UDM, or may obtain the user plane security policy from a local configuration. The user plane security policy includes a UP ciphering protection policy and/or a UP integrity protection policy.
      (1) The UP ciphering protection policy can be required (Required) to enable, preferred (Preferred) to enable, or not needed (not needed) to enable.
      (2) The UP integrity protection policy can be required (Required) to enable, preferred (Preferred) to enable, or not needed (not needed) to enable.
   5. The SMF sends a determined user plane security policy to the AMF.
      The SMF may send a determined user plane security policy to the AMF by using N_{amf}_Communication_N1N2MessageTransfer (N_{amf}_Communication_N1N2MessageTransfer).
   6. The AMF further sends a UP security policy to the NG-RAN.
      The AMF may send the UP security policy to the NG-RAN by using an N2 PDU session request.
   7. The NG-RAN activates the user plane security according to the received UP security policy.

For example, if the received is that a ciphering protection policy indicate to be required (required) to enable and an integrity protection policy indicate to be required (required) to enable, the NG-RAN enables UP ciphering protection and UP integrity protection, and performs ciphering protection, integrity protection, decipherment, and integrity verification on the UP data between the NG-RAN and the UE by using a UP ciphering key, a UP integrity protection key, and a UP security algorithm.

For another example, if the UP ciphering protection policy included in the UP security policy indicates to be required (required) to enable, and the UP integrity protection policy indicates to be not needed (not needed) to enable, the NG-RAN enables UP ciphering protection, does not enable UP integrity protection, and performs ciphering protection or decipherment on the UP data between the NG-RAN and the UE by using the UP ciphering key and the UP security algorithm.

For another example, when the UP ciphering protection policy or the UP integrity protection policy is preferred (preferred) to enable, the NG-RAN may determine whether to enable UP ciphering or not to enable UP ciphering, or enable UP integrity protection or not. In this case, the NG-RAN may send a determined UP activation result to the SMF.

8. The NG-RAN sends an RRC Connection Reconfiguration message to the UE. The message contains the UP security activation indication information.

The UP security activation indication information includes UP ciphering protection activation indication information and/or UP integrity protection activation indication information, the UP ciphering protection activation indication information indicates whether to enable UP ciphering protection, and the UP integrity protection activation indication information indicates whether to enable UP integrity protection.

For example, when the UP security activation indication information does not carry the UP ciphering protection activation indication information, the situation indicates that ciphering is enabled. When ciphering is not enabled, the UP security activation indication information carries the UP ciphering protection activation indication information, and the UP ciphering protection activation indication information notifies that the UE does not enable ciphering protection. For integrity protection, the UP security activation indication information includes the UP integrity protection activation indication information, and the UP integrity protection activation indication information indicates to enable or not to enable integrity protection. For example, the UP integrity protection activation indication information may notify, by using an indication enablement (enabled), that the UE enables integrity protection, or notify, by using an indication disablement (disable), the UE does not enable integrity protection.

Alternatively, the NG-RAN may indicate, in another manner, the UE whether to enable security protection (ciphering protection and/or integrity protection). For example, the RRC connection reconfiguration message carries or does not carry an information element (information element, IE) to indicate whether the UE enables security protection or not. Alternatively, different values may be set for the IE to indicate whether the UE enables security protection. This is not limited in this application.

Currently, for each DRB of a PDU session, the RRC connection reconfiguration message sent by the NG-RAN includes one piece of user plane security activation indication information corresponding to each DRB. A user plane security activation state of each DRB in the PDU session is the same, and may include enabling or not enabling. Enabling may also be referred to as being activated, and not enabling may be referred to as not being activated, or the like.

9. The UE activates UP security.

The UE activates the UP security between the UE and the base station based on the UP security activation indication information carried in step 8, to perform security protection or deciphering security protection on the UP data between the UE and the base station. Specifically, activating the UP security may include configuring a packet data convergence protocol (packet data convergence protocol, PDCP) entity corresponding to the DRB.

For example, if ciphering security is enabled, the PDCP entity configuring the DRB includes configuring the PDCP entity by using a ciphering algorithm and a key, so that when a data packet passes through the PDCP entity, the PDCP entity may perform security processing on the data packet.

10. The UE sends an RRC connection reconfiguration acknowledgment (ACK) message to the NG-RAN. Correspondingly, the NG-RAN receives the RRC connection reconfiguration acknowledgment message from the UE.

### 5. User plane security activation state

The user plane security activation state is a security activation state of the DRB. If an access network device determines to activate security protection of the DRB, a security state of the DRB may be an enabled state (which may also be referred to as an active state); or if an access network device determines not to activate security protection of the DRB, a security state of the DRB may be a not enabled state (which may also be referred to as a not activated state or an inactive state). The user plane security activation state may include a ciphering protection activation state and/or an integrity protection activation state. For example, the ciphering protection activation state may be an enabled state or a not enabled state, and the integrity protection activation state may be an enabled state or a not enabled state.

### VI. User plane security configuration

The user plane security configuration may include that DRB enables or does not enable user plane security. The UP security configuration of the DRB may also be referred to as a UP security activation indication. The terminal device and/or the access network node may configure, based on the user plane security configuration of the DRB, the PDCP entity corresponding to the DRB, so that when the data packet passes through the PDCP entity, the PDCP entity may perform security processing on the data packet.

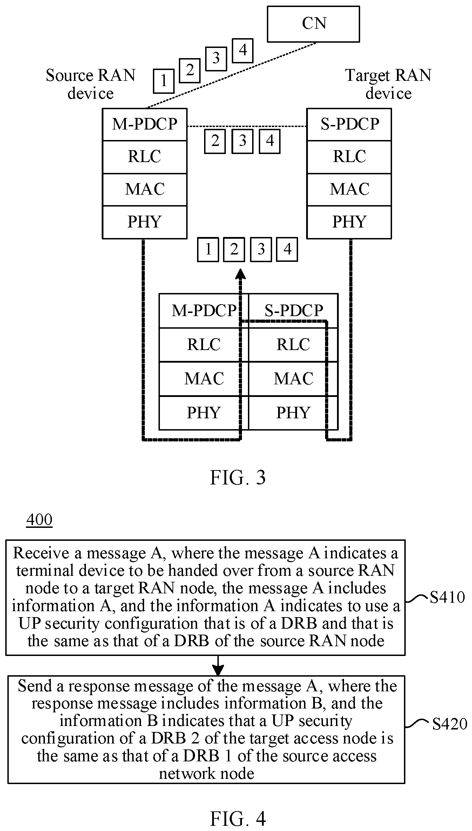

Currently, in a DAPS-based handover, a source RAN node may activate the DAPS handover for one or more DRBs. Regardless of Xn-based handover or N2-based handover, for the DRB of activating the DAPS handover, before the terminal device receives a resource release request from a target RAN node, the terminal device directly maintains a connection to the source RAN node, the terminal device communicates data packets with both the source RAN node and the target RAN node, and the source RAN node and the target RAN node may transmit a same data packet to the terminal device. For example, as shown in FIG. 3, in a handover process, a source RAN node allocates a sequence number (sequence number, SN) of a data packet, and sends, to a target RAN node, a data packet including an SN. After the target RAN node configures, based on a security activation state determined by the target RAN node, a PDCP entity corresponding to a DRB, and after the PDCP entity performs security processing on a data packet from the source RAN node, the target RAN node sends the data packet to a terminal device. In addition, after the source RAN node configures, based on the security activation state determined by the source RAN node, the PDCP entity corresponding to the DRB, and after the PDCP entity performs security processing on the data packet, the source RAN node sends the data packet to the terminal device. The source RAN node, the target RAN node, and the terminal device may separately configure a physical (physical, PHY) layer, a media access (media access control, MAC) layer, a radio link control (radio link control, RLC) layer, and a PDCP layer. A PDCP layer of the source RAN node may be referred to as a master-PDCP (master-PDCP, M-PDCP) layer, and a PDCP layer of the target RAN node may be referred to as a secondary-PDCP (secondary-PDCP, S-PDCP). In addition, a PDCP layer of the terminal device may also be classified into M-PDCP for processing a data packet from the source RAN node and S-PDCP for processing a data packet from the target RAN node. However, this application is not limited thereto.

The UP security activation state that is of the DRB and that is determined by the target RAN node and the source RAN node is determined by the two RAN nodes separately according to obtained user plane security policies. However, when a user plane security policy indication is preferred (preferred) to enable, the RAN node may enable UP security protection or may not enable UP security protection. If a security activation state determined by one RAN node is to enable ciphering, and a security activation state determined by another RAN node is not to enable ciphering protection. In a DAPS scenario, when the source RAN node and the target RAN node transmit a same data packet, an attacker may perform an exclusive OR operation on data packets received from the source RAN node and the target RAN node, that is, perform an exclusive OR operation on a ciphered data packet and a data packet that does not cipher, to obtain a keystream of the ciphering data packet. In this way, the attacker can easily obtain further key information, and further obtain a ciphertext of another data packet. Currently, an existing security mechanism in a DAPS mode has a security risk.

This application proposes, the target RAN node uses, for the DRB of the target RAN node based on an indication, a user plane security configuration that is the same as a user plane security configuration of the DRB of the source RAN node. This can reduce the security potential risk when the target RAN node and the source RAN node transmit the same data packet, and improve data transmission security.

It should be noted that this application may be applied to a scenario in which same data is transmitted in two paths. The application scenario includes but is not limited to a data transmission manner of a dual active protocol stack. In this embodiment of this application, DAPS is used as an example for description, but this application is not limited thereto.

The following describes in detail the communication method provided in embodiments of this application with reference to the accompanying drawings.

FIG. 4 is a schematic flowchart of a communication method according to an embodiment of this application.

S410. A target RAN node receives a message A (that is, an example of a first message). The message A indicates a terminal device to be handed over from a source RAN node to the target RAN node, the message A includes information A (that is, an example of first information), and the information A indicates to use a UP security configuration that is of a DRB and that is the same as that of a DRB OF the source RAN node.

For example, the message A may be a handover request message, and the handover request message requests the terminal device to be handed over from the source RAN node to the target RAN node. However, this application is not limited thereto.

The UP security configuration of the DRB is a security configuration indicating whether to enable UP security protection. Optionally, the UP security protection may be UP ciphering protection and/or UP integrity protection. The UP security configuration of the DRB may be whether to enable the UP ciphering protection and/or whether to enable the UP integrity protection.

For example, the UP security configuration may be to enable the UP ciphering protection. The information A indicates a DRB handed over to the target RAN node to maintain a UP ciphering protection state of the DRB on the source RAN node. To be specific, if the UP ciphering protection is enabled for the DRB before the handover, the UP ciphering protection is also enabled for the DRB after the handover. For integrity protection, an existing determining mechanism is still used. For example, the target RAN node may determine, according to a UP integrity protection policy, whether to enable the integrity protection. However, this application is not limited thereto.

The target RAN node may determine, based on the message A, whether to accept handover of the terminal device from the source RAN node to the target RAN node, and may determine, based on the information A in the message A, to use a UP security configuration that is the same as the UP security configuration of the DRB of the source RAN node. The target RAN node may determine, based on the information A, that some DRBs of the target RAN node use the UP security configuration that is the same as the UP security configuration of the DRB of the source RAN node, or that all DRBs of the target RAN node use the UP security configuration that is the same as the UP security configuration of the DRB of the source RAN node, or the target RAN node. Specifically, the following implementations may be included but are not limited.

Implementation 1: The information A includes a DAPS handover indication, and the DAPS handover indication indicates a DRB 1 of the source RAN node to use DAPS handover.

Optionally, the information A includes identification information of the DRB 1.

The target RAN node determines, based on the DAPS handover indication, that a DRB 2 (that is, an example of a second data radio bearer) of the target RAN node uses a UP security configuration that is the same as the UP security configuration of the DRB 1 (that is, an example of a first data radio bearer) of the source RAN node.

The DRB 2 is a DRB after the DRB 1 is handed over to the target RAN node, or the DRB 2 is a DRB on the target RAN node after the DRB 1 activates DAPS. The DRB 1 and the DRB 2 may carry data packets with a same control. That is, the DRB 2 is a DRB that is in the target RAN node and that corresponds to the DRB 1.

By way of example and not limitation, identification information of the DRB 1 in a source access network node is the same as identification information of the DRB 2 in a target access network node.

To be specific, when the DAPS handover is activated for one or more DRBs in a PDU session, the target RAN node uses the UP security configuration for the one or more DRBs of the source access network node to configure user plane security of the one or more DRBs between the target access network node and UE.

The message A further includes the UP security configuration of the DRB 1. The target RAN node configures a PDCP entity of the DRB 2 based on the UP security configuration of the DRB 1, that is, configures security of the PDCP entity of the DRB 2.

For example, after the target RAN node receives the message A, the target RAN node may determine, based on a DAPS indication, that the UP security configuration of the DRB 2 is the same as the UP security configuration of the DRB 1, and configure security protection of the DRB 2 on the target RAN node based on the UP security configuration of the DRB 1 in the message A, that is, configure the PDCP entity of the DRB 2, so that security protection (such as ciphering processing and integrity protection processing) is performed on a data packet that passes through the PDCP entity. If the UP security configuration of the DRB 1 is to enable the UP security protection, the target RAN node configures security protection of the DRB 2 as being enabled, that is, configures the PDCP entity of the DRB 2, so that the security protection (such as ciphering processing and integrity protection processing) is performed on the data packet that passes through the PDCP entity. If the UP security configuration of the DRB 1 is not to enable the security protection, the target RAN node configures the UP security protection of the DRB 2 as being not enabled, that is, the security protection is not performed on the data packet that passes through the PDCP entity of the DRB 2.

It should be noted that the UP security configuration of the DRB may also be referred to as a UP security activation indication. A name indicating the UP security configuration of the DRB is not limited in this application.

It should be understood that in this embodiment of this application, an example in which the RAN node and the terminal device configure the PDCP entity of the DRB 2 based on the UP security configuration is used for description. However, this application is not limited thereto, and the configuration is performed on another entity, for example, the configuration may be performed on a NAS layer entity to perform security processing on data.

Optionally, the UP security configuration of the DRB 1 is included in UE context information in the message A or RRC context information in the UE context information.

The UE context information may include a UE security capability, access stratum (access stratum, AS) security information (such as a key KgNB* and a security protection algorithm), a list of PDU session resources to be established, and an RRC context. The key KgNB* is used to generate a signaling plane security key and/or a user plane security key. The RRC context may include a UE radio-related capability and RRC reconfiguration information. However, this application is not limited thereto.

Optionally, the message A further includes a UP security policy 1, and the UP security policy 1 indicates a UP security policy of the DRB 1, or the UP security policy 1 indicates a UP security policy of a PDU session corresponding to the DRB 1.

Optionally, the message A includes a list of PDU sessions to be established, the list of the PDU sessions to be established includes PDU session information corresponding to the DRB 1, and the UP security policy 1 is included in the PDU session information.

In an optional implementation, the target RAN node determines, based on the DAPS handover indication, to use, for the DRB 2 and/or one or more DRBs associated with the DRB 2, a UP security configuration that is the same as the UP security configuration of the DRB 1 of the source RAN node.

The one or more DRBs associated with the DRB 2 may be DRBs that belong to a same PDU session as the DRB 2. In other words, the DRB 2 is associated with the one or more DRBs by using an identifier of a corresponding PDU session. However, this application is not limited thereto.

Optionally, the message A is from the source RAN node. The message A may be sent by the source RAN node to the target RAN node, or the message A is sent by an AMF node to the target RAN node. The message A includes a transparent container (transparent container) that is received by the AMF node and that is from the source RAN node. The transparent container includes the DAPS indication.

The transparent container may also be referred to as transparent information (transparent information), that is, information that is transparently transmitted by the source RAN node to the target RAN node via the AMF node. This is not limited in this application.

Implementation 2: The information A includes a UP security activation state, and the UP security activation state is a user plane security activation state of the DRB 1 of the source RAN node or a user plane security activation state of the PDU session corresponding to the DRB 1.

That the source RAN node obtains the UP security activation state of the DRB 1 (or the PDU session corresponding to the DRB 1) includes that the source RAN node obtains the UP security activation state locally. For example, if the source RAN node locally stores the UP security activation state of the DRB 1 (or the PDU session corresponding to the DRB 1), the stored UP security activation state is included in the message A. If the UP security activation state of the DRB 1 (or the PDU session corresponding to the DRB 1) is not locally stored, the source RAN node may determine the UP security activation state based on a local security configuration of the DRB 1, and include the determined UP security activation state in the message A. However, this application is not limited thereto.

The target RAN node determines, based on the UP security activation state, that the DRB 2 of the target RAN node uses a UP security configuration that is the same as the UP security configuration of the DRB 1.

To be specific, when the target RAN node determines that the message A includes a UP security activation state of a DRB or a UP security activation state of a PDU session, the target RAN node determines, based on the UP security activation state, to use, for the DRB or for a DRB in the PDU session, a UP security configuration that is the same as a UP security configuration used by the source RAN node for the DRB.

In an implementation, after receiving the UP security activation state, the target RAN node determines the UP security configuration of the DRB 2 based on the UP security activation state.

In another implementation, after receiving the UP security activation state, the target RAN node determines to reuse the UP security configuration of the DRB that is received from the source RAN node.

For example, when the terminal device receives the UP security activation state of the DRB 1 or the UP security activation state of the PDU session corresponding to the DRB 1 that is in the message A, the terminal device determines that the UP security configuration of the DRB 1 that is received from the source RAN node is reused for the DRB 2. However, this application is not limited thereto.

Optionally, the UE context information in the message A or a list of PDU session resources to be established in the UE context includes the UP security activation state.

According to the foregoing implementation, the target RAN node determines the UP security configuration of the DRB 2 based on the UP security activation state. This can ensure that the UP security configuration used by the target RAN node for the DRB 2 is the same as the UP security configuration used by the source RAN node for the DRB 1. In an optional implementation, the target RAN node determines, based on the UP security activation state of the DRB 1 or the UP security activation state of the PDU session corresponding to the DRB 1 that is in the message A, to use, for the DRB 2 and/or the one or more DRBs associated with the DRB 2, a UP security configuration that is the same as the UP security configuration of the DRB 1 of the source RAN node.

The one or more DRBs associated with the DRB 2 may be DRBs that belong to a same PDU session as the DRB 2. In other words, the DRB 2 is associated with the one or more DRBs by using an identifier of a corresponding PDU session. However, this application is not limited thereto.

Optionally, the message A is from the source RAN node. The message A may be sent by the source RAN node to the target RAN node, or the message A is sent by the AMF node to the target RAN node. The message A includes a transparent container that is received by the AMF node and that is from the source RAN node, and the transparent container includes a UP security activation state indication.

In an implementation, if the source RAN node determines that the DRB 1 uses the DAPS handover, the message A includes the information A.

In another implementation, if the source RAN node determines that the DRB 1 uses the DAPS handover, and the UP security policy of the PDU session corresponding to the DRB 1 indicates enabling preferred (for example, a ciphering protection security policy or an integrity protection security policy indicates enabling preferred), the source RAN node determines that the message A includes the information A.

The target RAN node determines the UP security configuration of the DRB in the PDU session based on the information A.

It should be noted that Implementation 1 and Implementation 2 are merely two examples provided in this embodiment of this application. This application is not limited thereto, and may further include another implementation. The information A may directly indicate that the DRB 2 of a target network device uses the UP security configuration that is the same as that of the DRB 1, or may indirectly indicate, for example, by using the DAPS indication or the UP security activation state, that the DRB 2 of the target network device uses the UP security configuration that is the same as that of the DRB 1. It should be understood that, provided that the user plane security configuration of the DRB of the target access network node that is determined by the target access network node based on the information in the message A is the same as the user plane security configuration of the DRB of the source access network node, the information may be considered to indicate to use a user plane security configuration that is of a data radio bearer and that is the same as that of the data radio bearer of the source access network node. Description of the main information shall fall within the protection scope of this application, and examples are not provided one by one herein again.

S420: The target RAN node sends a response message of the message A. The response message includes information B (that is, an example of second information), and the information B indicates the UP security configuration of the DRB 2 of the target access network node.

The UP security configuration of the DRB 2 is the same as the UP security configuration of the DRB 1. The response message is used to acknowledge that the terminal device is handed over from the source RAN node to the target RAN node. A manner in which the target RAN node uses the UP security configuration for the DRB 2 and that is indicated by the information B includes but is not limited to the following manners.

Manner 1: The information B indicates the target RAN node to use, for the DRB 2, a UP security configuration that is the same as that of the DRB 1 of the source RAN node.

The target RAN node indicates, to the terminal device by using the information B, that the UP security configuration used by the target RAN node for the DRB 2 is the same as the UP security configuration of the DRB 1 of the source RAN node.

For example, the target RAN node notifies, by using an offset or a variable (Delta), the UP security configuration of a DRB of the target RAN node. For example, in this example, the target RAN node compares the determined UP security configuration of the DRB 2 with the UP security configuration of the DRB 1 in the message A. If a comparison result is that the determined UP security configuration of the DRB 2 is different from the UP security configuration of the DRB 1 in the message A, the target RAN node sends determined UP security configuration information of the DRB 2 to the source RAN node by using the response message, and the source RAN node notifies the terminal device. If a comparison result is that the determined UP security configuration of the DRB 2 is the same as the UP security configuration of the DRB 1 in the message A, the response message does not include the UP security configuration of the DRB 2, an RRC reconfiguration message that is sent by the source RAN node to the terminal device and that includes a handover command also does not include the UP security configuration of the DRB 2, and the terminal device does not obtain the UP security configuration of the DRB 2 from the source RAN node. In this case, it is considered that the UP security configuration of the DRB 2 is the same as that of the DRB 1. For another example, if the target RAN node determines that the UP security configuration of the source RAN node is reused for the DRB 2, the UP security configuration indicating the UE to reuse the UP security configuration of the DRB 1 is not included.

In this example, because the target RAN node uses, for the DRB 2 based on the information A, the UP security configuration that is the same as the UP security configuration used by the source RAN node for the DRB 1, and there is no difference, the target RAN node may indicate, by using the information B, that the UP security configuration used by the target RAN node for the DRB 1 is the same as the UP security configuration used by the source RAN node, and the UP security configuration of the DRB 2 does not needed to be included.

Optionally, the target RAN node may further determine another configuration of the DRB 2 in a Delta manner, for example, a security protection algorithm, or the like. If a configuration of the DRB 2 is the same as a configuration corresponding to the DRB 1, the information B may not include the configuration. If a configuration of the DRB 2 is different from the configuration corresponding to the DRB 1, an offset is calculated, and the information B may include the offset.

For another example, the information B is a 1-bit indication. When the information B indicates "1", it indicates that the UP security configuration used by the target RAN node for the DRB 2 is the same as the UP security configuration used by the source RAN node for the DRB 1, and when the information B indicates "0", it indicates that the UP security configuration used by the target RAN node for the DRB 2 is different from the UP security configuration used by the source RAN node for the DRB 1. Alternatively, an indication state of the information B includes "true (true)" or "false (false)". When the information B indicates "true", it indicates that the UP security configuration used by the target RAN node for the DRB 2 is the same as the UP security configuration used by the source RAN node for the DRB 1, and when the information B indicates "false", it indicates that the UP security configuration used by the target RAN node for the DRB 2 is different from the UP security configuration used by the source RAN node for the DRB 1. However, this application is not limited thereto.

Manner 2: The information B includes the UP security configuration of the DRB 2.

In S410, after determining, based on the information A, to use, for the DRB 2, the UP security configuration that is the same as the UP security configuration used by the source RAN node for the DRB 1, the target RAN node generates the UP security configuration of the DRB 2 that is the same as the UP security configuration of the DRB 1. Further, the target RAN node configures a PDCP entity of the DRB 2 based on the UP security configuration. The target RAN node indicates the UP security configuration of the DRB 2 by using the information B.

The response message includes the transparent container that needs to be sent to the terminal device. The transparent container includes the information B. After the transparent container is transferred to the source RAN node by using the response message, the source RAN node forwards the transparent container to the terminal device. The terminal device may determine, based on the transparent container, that the UP security configuration used by the target RAN node for the DRB 2 is the same as the UP security configuration used by the source RAN node, and configure a corresponding PDCP entity of the DRB. When the handover procedure uses Xn-based handover, the response message may be a message sent by the target RAN node to the source RAN node. When the handover procedure uses N2-based handover, the response message may be a message sent by the target RAN node to a core network node (for example, the AMF node), and the core network node forwards the transparent container to the source RAN node. However, this application is not limited thereto.

It should be noted that, for a DRB 3 on which DAPS activation is not performed, the target RAN node may determine, according to the UP security policy of the PDU session, whether to activate security protection of the PDU session, and determine a UP security configuration of the DRB 3 in the PDU session. The UP security configuration of the DRB 3 that is determined by the target RAN node according to the UP security policy may be the same as or different from that determined by the source RAN node. This is not limited in this application. The target RAN node includes, in the information B, the configuration of the DRB on which DAPS activation is not performed, and transparently transmits the information B to the terminal device.

Optionally, after the terminal device is handed over to the target RAN node, the target RAN node updates the user plane security configuration of the DRB 2 according to the UP security policy of the DRB 2 or according to the UP security policy of the PDU session corresponding to the DRB 2. The UP security policy may be a UP security policy carried in the message A, or may be from an SMF.

For example, a current UP security activation state of the PDU session corresponding to the DRB 1 is a UP security activation state 1. The target RAN node may determine a UP security activation state 2 according to a user plane security policy in the message A or a user plane security policy from the SMF. The target RAN node may determine an updated UP security configuration of the DRB 2 based on the UP security activation state 2. The target network device may send the updated UP security configuration of the DRB 2 to the terminal device. The updated UP security configuration of the DRB 2 may be carried in an RRC message sent by the target RAN node to the terminal device.

For another example, the target RAN node receives, in a path switch request, the user plane security policy from the SMF, and the target RAN updates a local user plane security policy (that is, a user plane security policy from the source RAN). If current user plane confidentiality and a current integrity protection activation state of the UE is inconsistent with the user plane security policy received from the SMF, the target RAN node updates the UP security configuration of the DRB 2 according to the user plane security policy sent by the SMF. When the target RAN node determines that the user plane security policy in the message A is the same as the user plane security policy from the SMF, after the UE completes handover, the target RAN updates the UP security configuration of the DRB 2 according to the user plane security policy received from the source RAN node or the user plane security policy received from the SMF, and may notify the terminal device by using an UP security configuration indication 3. Further, the target RAN reassesses, only when the user plane security policy indicates that ciphering protection and/or integrity protection are/is preferred, whether to update the security configuration of the DRB.

For another example, the target RAN node may determine the UP security activation state 2 according to the user plane security policy in the message A or the user plane security policy from the SMF. When the UP security activation state 2 is different from the UP security activation state 1, the target RAN node updates the UP security configuration of the DRB 2, and may notify the terminal device by using the UP security configuration indication 3. However, this application is not limited thereto.

By way of example and not limitation, the updated UP security configuration of the DRB 2 may be carried in a resource release message sent by the target RAN node to the terminal device.

Optionally, a case: after the terminal device completes the handover to the target RAN node may include but is not limited to:
after the target access network device receives, from the terminal device, an indication indicating that the handover completes;
after the target access network device sends an indication indicating that the handover succeeds;
after the target access network device receives an indication indicating sequence number (SN) state transition;
after the target access network device sends an indication indicating that user context is released; or
after the target access network device sends, to the terminal device, an indication indicating that a resource is released.

According to the foregoing solution, the UP security configuration used by the target RAN node for the DRB is the same as the user plane security configuration of the DRB of the source RAN node. This can reduce a data security potential risk when the target RAN node and the source RAN node transmit a same data packet, and improve data transmission security.

The communication method provided in this application may be applied to a handover process including but not limited to an Xn interface-based handover process, and may alternatively be applied to an N2-based handover process. The following separately describes the communication method in this application that is applied to the Xn interface-based handover process and the N2-based handover process. It should be understood that this application is not limited thereto.

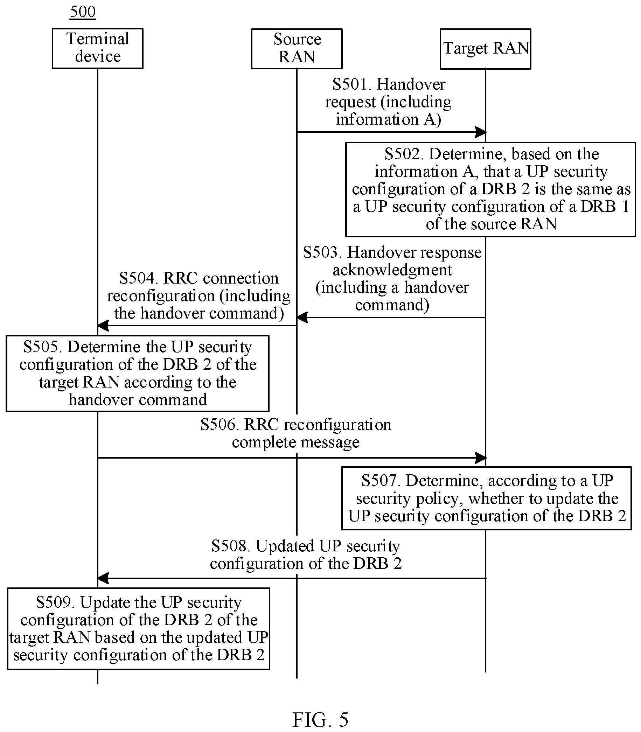

The following first describes an embodiment in which the communication method in this application is applied to the Xn interface-based handover process. FIG. 5 is a schematic flowchart of a security configuration method in an Xn interface-based handover scenario according to an embodiment of this application.

It should be noted that, in the embodiment in FIG. 5, for a part that is the same as or similar to that in the embodiment in FIG. 4, refer to the foregoing description of the embodiment in FIG. 4. For brevity, details are not described herein again.

S501. A source RAN node sends a handover request message (that is, an example of a first message) to a target RAN node.

Correspondingly, the target RAN node receives the handover request message from the source RAN node. The handover request message requests the terminal device to be handed over from the source RAN node to the target RAN node. The handover request message includes information A. The information A indicates to use a UP security configuration that is the same as the UP security configuration of a DRB of the source RAN node.

In an implementation, the information A is a DAPS handover indication, and the DAPS handover indication indicates a DRB 1 to use a DAPS handover.

In another implementation, the information A is a UP security activation state, and the UP security activation state is a UP security activation state of the DRB 1 or a UP security activation state of a PDU session corresponding to the DRB 1.

Optionally, when the source RAN node determines that the DRB 1 uses the DAPS handover, the handover request message includes the UP security activation state. Alternatively, when the source RAN node determines that the DRB 1 uses the DAPS handover, and the UP security policy of the DRB 1 or the UP security policy of the PDU session corresponding to the DRB 1 indicates that UP security protection is preferred to enable, the handover request message includes the UP security activation state.

Optionally, when the source RAN node determines that the DRB 1 uses the DAPS handover, and a ciphering protection policy in the UP security policy of the DRB 1 or a ciphering protection policy in the UP security policy of the PDU session corresponding to the DRB 1 indicates that UP ciphering protection is preferred to enable, the handover request message includes an activation state of the UP ciphering protection. For integrity protection, an existing determining mechanism is still used.

Optionally, the handover request message further includes information such as KgNB*, information about the list of the PDU session resources to be established, and an RRC context. The information about the list of PDU session resources to be established may include a UP security policy corresponding to each PDU session.

S502. The target RAN node determines, based on the information A, that a UP security configuration of a DRB 2 of the target RAN node is the same as a UP security configuration of the DRB 1 of the source RAN node.

In an implementation, the information A is a DAPS handover indication, and the target RAN node determines, based on the DAPS handover indication, that the target RAN node uses, for the DRB 2, the UP security configuration that is the same as the UP security configuration of the DRB 1 of the source RAN node.

In another implementation, the information A is the UP security activation state, and the target RAN node determines, based on the UP security activation state, the UP security configuration used for the DRB 2. Because the UP security configuration is determined based on the same UP security activation state, the UP security configuration of the DRB 2 is the same as the UP security configuration used by the source RAN node for the DRB 1.

The target RAN node generates a handover command. The handover command indicates the UP security configuration used by the target RAN node for the DRB 2. By way of example and not limitation, the handover command may include information B or a transparent container including information B. The information B may indicate, in Manner 1 (that is, indicating the target RAN node to use, for the DRB 2, the UP security configuration that is the same as that of the DRB 1 of the source RAN node) or Manner 2 (including the UP security configuration for the DRB 2) described in the embodiment of FIG. 4, that the UP security configuration used by the target RAN node for the DRB 2 is the same as the UP security configuration used by the source RAN node for the DRB 1.

S503. The target RAN node sends a handover response acknowledgment message to the source RAN node. The handover response acknowledgment message includes the handover command.

Correspondingly, the source RAN node receives the handover response acknowledgment message from the target RAN node.

S504. The source RAN node sends an RRC connection reconfiguration message to the terminal device. The RRC connection reconfiguration message includes the handover command.

S505. The terminal device determines, according to the handover command, the UP security configuration used by the target RAN node for the DRB 2.

After receiving the handover command, the terminal device may determine the security configuration of the DRB between the terminal device and the target RAN node according to the handover command. Further, the terminal device configures the DRB between the terminal device and the target RAN node.

S506. The terminal device sends an RRC reconfiguration complete message to the target RAN node.

Correspondingly, the target RAN node receives the RRC reconfiguration complete message from the terminal device.

S507. The target RAN determines, according to the UP security policy, whether to update the UP security configuration of the DRB 2.

After the target RAN node receives the RRC reconfiguration complete message from the terminal device, the target RAN node determines a user plane security activation state 2 based on the UP security policy of the PDU session corresponding to the DRB 2 from the SMF or carried in the handover request message.

If the user plane security activation state 2 is different from a current user plane security activation state 1 in the PDU session corresponding to the DRB 1, the target RAN node sends an updated security configuration of the DRB 2 to the terminal device in S509 based on the user plane security activation state 2, that is, an updated security activation indication.

S508. The target RAN sends the updated UP security configuration of the DRB 2 to the terminal device.

Correspondingly, the terminal device receives the updated security configuration of the DRB 2 from the target RAN.

S509. The terminal device updates the UP security configuration of the DRB 2 of the target RAN based on the updated security configuration of the DRB 2 (that is, the updated security activation indication).

For example, a PDCP entity corresponding to a corresponding DRB is configured based on the updated security configuration of the DRB 2.

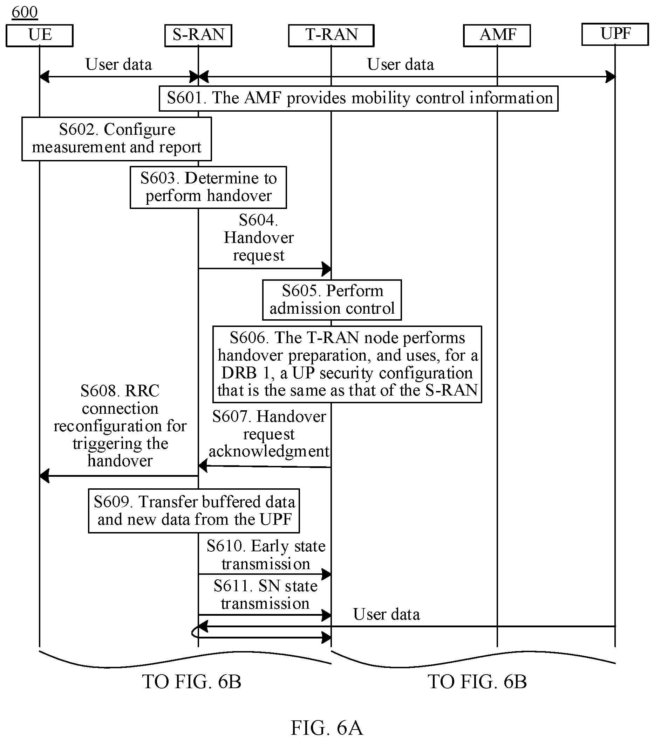

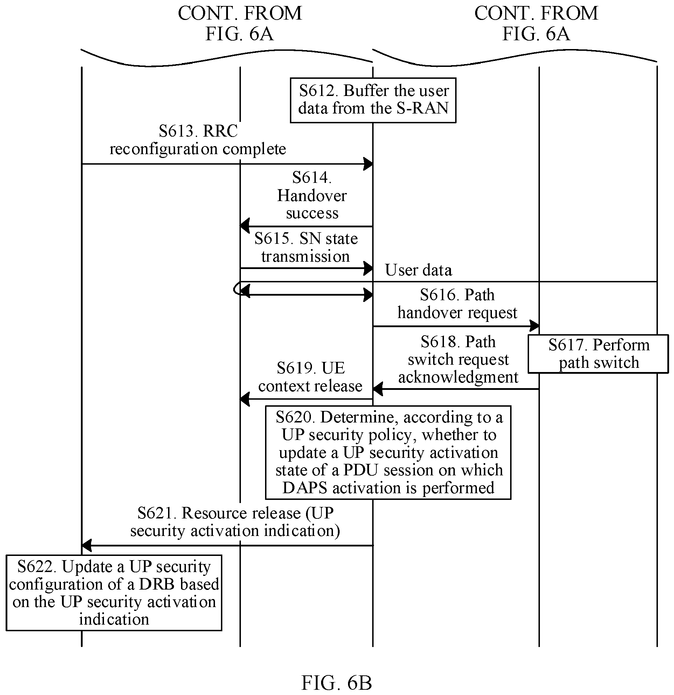

FIG. 6A and FIG. 6B are another schematic flowchart of a security configuration method in an Xn interface-based handover scenario according to an embodiment of this application.

It should be noted that, in the embodiment in FIG. 6A and FIG. 6B, for a part that is the same as or similar to that in the embodiment in FIG. 4 and FIG. 5, refer to the foregoing description of the embodiment in FIG. 4 and FIG. 5. For brevity, details are not described herein again.

In this embodiment, UE establishes a connection to a core network by using a source RAN (Source-RAN, S-RAN) node, and transmits uplink and downlink data packets. The S-RAN node may determine, based on a measurement report of the UE, to trigger an Xn handover procedure, to hand over the UE to a T-RAN node (target-RAN, T-RAN). The T-RAN node performs UP security configuration of a DRB based on the method provided in this application. This improves data transmission security.

S601. The S-RAN node obtains mobility control information from an AMF node.

In a process in which the UE establishes a connection to a core network element, or in a process in which the UE performs a location area update procedure with the core network element, the S-RAN node obtains the mobility control information from the AMF node, for example, roaming and access restriction information.

S602. The S-RAN node configures a measurement procedure of the UE, and the UE may perform reporting based on the measurement configuration.

S603. The S-RAN node determines the UE to be handed over based on the measurement report and radio resource management information.

S604. The S-RAN node sends a handover request message to the T-RAN node.

The handover request message may include a target cell ID, a globally unique AMF identifier (globally unique AMF identifier, GUAMI), UE context information, UE historical information, and the like.

The UE context information may include a UE security capability, AS security information (for example, KgNB*), a list of PDU session resources to be established, and an RRC context.

The information about the PDU session resources to be established may include a PDU session ID, single network slice selection assistance information (single network slice selection assistance information, S-NSSAI), a PDU session type, a UP security policy of the PDU session, and a mapping list from a source DRB to a quality of service (quality of service, QoS) flow (flow).

The UP security policy includes an integrity protection security policy and a confidentiality protection security policy. The integrity protection security policy indicates that UP integrity protection is required to enable, or preferred to enable or not to enable. The confidentiality protection security policy indicates that UP ciphering protection is required to enable, or preferred to enable or not to enable. The UP security policy may further include a maximum integrity protection data rate.

The mapping list from the source DRB to the QoS flow may include a DRB ID and a QoS flow ID (QoS flow ID, QFI). For a DRB or DRBs of which DAPS needs to be activated, the mapping list from the source DRB to the QoS flow further includes the DRB ID, the QFI or QFIs, and a DAPS handover indication. The DAPS handover indication includes a DAPS handover indication indicating a DRB 1 to use a DAPS handover.

Optionally, the handover request message includes a UP security activation state, and the UP security activation state indicates a UP security activation state of the DRB 1 or a UP security activation state of a PDU session corresponding to the DRB 1.

For example, when the S-RAN node determines that the DRB 1 uses the DAPS handover, the handover request message includes the UP security activation state, and the UP security activation state indicates the UP security activation state of the DRB 1 or the UP security activation state of the PDU session corresponding to the DRB 1. Alternatively, when the S-RAN node determines that the DRB 1 uses the DAPS handover, and the UP security policy of the DRB 1 or the UP security policy of the PDU session corresponding to the DRB 1 indicates that UP security protection is preferred to enable, the handover request message includes the UP security activation state.

By way of example and not limitation, the UP security activation state is specifically carried in PDU session information corresponding to the DRB 1 in the list of the PDU session resources to be established.

The RRC context may include a UE radio-related capability and RRC reconfiguration information, and the RRC reconfiguration information may include UP security configuration information of the DRB of the S-RAN node.

It should be noted that the foregoing shows only some related information that may be included in the handover request message, and the handover request message may further include another information. This is not limited in this application.

S605. The T-RAN node may perform admission control.

If the T-RAN node receives slice information, the T-RAN node performs slice admission control. If a slice associated with the PDU session is not supported by the T-RAN node, the T-RAN node rejects the PDU session.

S606. The T-RAN node performs handover preparation. The handover preparation includes: The T-RAN node uses, for a DRB 2, a UP security configuration that is the same as that of the DRB 1 of the S-RAN node.

If the DAPS handover indication is received in step S604, the T-RAN node determines whether to accept the DAPS handover, and indicates a determined result to the S-RAN node. If the T-RAN node receives the DAPS handover, the T-RAN node uses, for the DRB 2, the UP security configuration that is the same as that of the DRB 1 of the S-RAN node.

In an implementation, the T-RAN node determines, based on the DAPS handover indication of the DRB 1, to use, for the DRB 2 of the T-RAN node, the UP security configuration that is the same as that of the DRB 1 of the S-RAN node.

The T-RAN node may configure the DRB 2 of the T-RAN node based on the user plane security configuration of the DRB 1 included in the RRC context in the handover request message, for example, configure a PDCP entity corresponding to the DRB 2. Optionally, another DRB in the PDU session corresponding to the DRB 1 also uses a UP security configuration that is the same as that of the DRB of the S-RAN node, and the UP security configuration includes whether to enable ciphering protection and/or integrity protection of the DRB.

In another implementation, the T-RAN node determines, based on the UP security activation state of the DRB 1 (or specifically, the PDU session corresponding to the DRB 1) included in the handover request message, to use, for the DRB 2 of the T-RAN node, the UP security configuration that is the same as that of the S-RAN node.

For example, the T-RAN node determines, based on the UP security activation state of the DRB 1 (or specifically, the PDU session corresponding to the DRB 1), the UP security configuration used for the DRB 2. However, this application is not limited thereto.

For a PDU session on which the DAPS activation is not performed, the T-RAN node determines, according to the UP security policy of the PDU session, whether to activate security protection of the PDU session, and determines a user plane security configuration of the DRB in the PDU session; and includes the updated DRB user plane security configuration in the transparent container, and sends the transparent container to the UE.

S607. The T-RAN node sends a handover request acknowledgment message to the S-RAN node.

The handover request acknowledgment message includes a transparent container, and the transparent container is used as an RRC message and is sent to the UE through the S-RAN node.

The T-RAN node may indicate, by using the transparent container, that the UP security configuration used by the target RAN node for the DRB 2 is the same as the UP security configuration used by the source RAN node for the DRB 1. For example, the transparent container may indicate, by using Manner 1 (that is, indicating the target RAN node to use, for the DRB 2, the UP security configuration that is the same as that of the DRB 1 of the source RAN node) or Manner 2 (including the UP security configuration of the DRB 2) described in the embodiment of FIG. 4, that the UP security configuration used by the target RAN node for the DRB 2 is the same as the UP security configuration used by the source RAN node for the DRB 1.

S608. The S-RAN node sends an RRC connection reconfiguration message to the UE, to trigger the UE to perform handover.

The RRC reconfiguration message includes the transparent container from the T-RAN node and information used to access a target cell (that is, a cell managed by the T-RAN). The information about the target cell includes a target cell ID, a cell radio network temporary identifier (cell radio network temporary identifier, C-RNTI) of the target cell, a security algorithm identifier of a security algorithm selected by the T-RAN node, and the like.

The UE determines, based on the transparent container from the T-RAN node, that the UP security configuration used by the T-RAN node for the DRB 2 is the same as the UP security configuration used by the S-RAN node for the DRB 1. In addition, the UP security configuration of the DRB 2 of the T-RAN node is configured based on the transparent container.

For a DRB or DRBs of which DAPS is configured (including the DRB 1), the S-RAN node continues to transmit a downlink data packet until a handover success message sent by the T-RAN node is received (that is, in S613).

S609. The S-RAN node transfers buffered data and new data from a UPF.

S610. For one or more DRBs of which DAPS is configured, the S-RAN node sends an early state transmission message to the T-RAN node.

The early state transmission message includes a downlink count (count) value, which indicates a PDCP data network (data network, DN) of a 1^{st} PDCP service data unit (service data unit, SDU) sent by the S-RAN node to the T-RAN node and a hyper frame number (hyper frame number, HFN) of the SDU.

The S-RAN node continues to allocate an SN of the downlink data packet until the S-RAN node sends a sequence number (SN) state transmission message to the T-RAN node (that is, in S615).

S611. For one or more DRBs of which DAPS is not configured, the S-RAN node sends the SN state transmission message to the T-RAN node.

The SN state transmission message is used to transmit an uplink PDCP SN receiving state and a downlink PDCP SN transmission state.

S612. The S-RAN node forwards, to the T-RAN, data of the one or more DRBs of which DAPS is not configured, and the T-RAN buffers the user data from the S-RAN.

S613. The UE detaches and synchronizes from a source cell to the new cell, and then sends, to the T-RAN node, an RRC reconfiguration complete message.

The UE sends the RRC reconfiguration complete (RRCReconfigurationComplete) message to the T-RAN node, to complete an RRC handover procedure.

For the DAPS handover, the UE continues to maintain a connection with an S-RAN node cell until the UE receives the RRC reconfiguration (RRCReconfiguration) message. Upon receiving a release request from the T-RAN node, the UE releases a source signaling radio bearer (signaling radio bearer, SRB) resource and a security configuration of the source cell, and stops data transmission with the S-RAN node.

S614. For the DAPS handover, the T-RAN node sends a handover success message to the S-RAN node, to notify the S-RAN node that the UE has successfully accessed the target cell.

S615. For one or more DRBs on which the DAPS handover is performed, the S-RAN node sends the SN state transmission message to the T-RAN node.

S616. The T-RAN node sends a path switch request message to the AMF node.

The T-RAN node triggers, by using the path switch request message, a 5GC to switch a downlink data path to the T-RAN node. The path switch request message includes the user plane security policy sent by the S-RAN node.

S617. The 5GC and the T-RAN node perform downlink path switch.

S618. The AMF node sends a path switch request acknowledgment message to the T-RAN node.

If the user plane security policy sent by the T-RAN node in S616 is different from a local UP security policy of the SMF, the path switch acknowledgment request further includes the UP security policy.

S619. The T-RAN node sends a UE context release message to the S-RAN node.

The T-RAN node sends the UE context release message to the S-RAN node based on a received path switch request acknowledgment message. The S-RAN node releases a radio resource and a control plane resource associated with the UE context.

S620. The T-RAN node determines, according to the UP security policy, whether to update a UP security activation state of the PDU session of which the DAPS is activated.

If the UP security policy of the PDU session corresponding to the DRB 2 is not received in S618, the T-RAN node determines, according to the UP security policy that is in the PDU session corresponding to the DRB 1 and that is received from the S-RAN node, whether to update the UP security activation state of the PDU session corresponding to the DRB 2. If the UP security policy of the PDU session corresponding to the DRB 2 is received in S618, the T-RAN node determines, based on the UP security policy, whether to update the UP security activation state of the PDU session of which the DAPS handover is activated.

For the DRB on which DAPS handover is performed, for example, the DRB 2, the T-RAN node may determine, according to the UP security policy of the PDU session corresponding to the DRB 2, a UP security activation state 2. If a current UP security activation state 1 in the PDU session is different, the T-RAN node determines to update the UP security configuration of the DRB 2. The T-RAN node determines, based on the UP security activation state 2, a UP security configuration used for the DRB 2, that is, an updated UP security configuration (if the current UP security configuration of the DRB 2 is a UP security configuration 1, the updated UP security configuration of the DRB 2 may be a UP security configuration 2). Optionally, the T-RAN node also updates a UP security configuration of another DRB that is corresponding to the PDU session and of which the DAPS handover is not activated.

S621. The T-RAN node sends a resource release message to the terminal device. The resource release message includes a UP security activation indication.

The UP security activation indication (that is, the UP security configuration indication 3) indicates the updated security configuration of the DRB 2.

It should be noted that, that the UP security activation indication is carried in the resource release message is only an example, and the UP security activation indication may be further carried in another RRC message sent by the T-RAN node to the terminal device. This is not limited in this application.

S622. The terminal device updates the UP security configuration of the DRB based on the UP security activation indication.

After receiving the resource release request, the UE releases a source SRB resource and the security configuration of the source cell. In addition, the terminal device updates the UP security configuration of the DRB based on the UP security activation indication.

Optionally, in an alternative solution in which the UP security activation indication is carried in the resource release message to notify the terminal device to update the UP security configuration, the T-RAN may trigger an intra-RAN (intra-RAN) handover procedure, so that the terminal device updates the security configuration of the DRB 1.

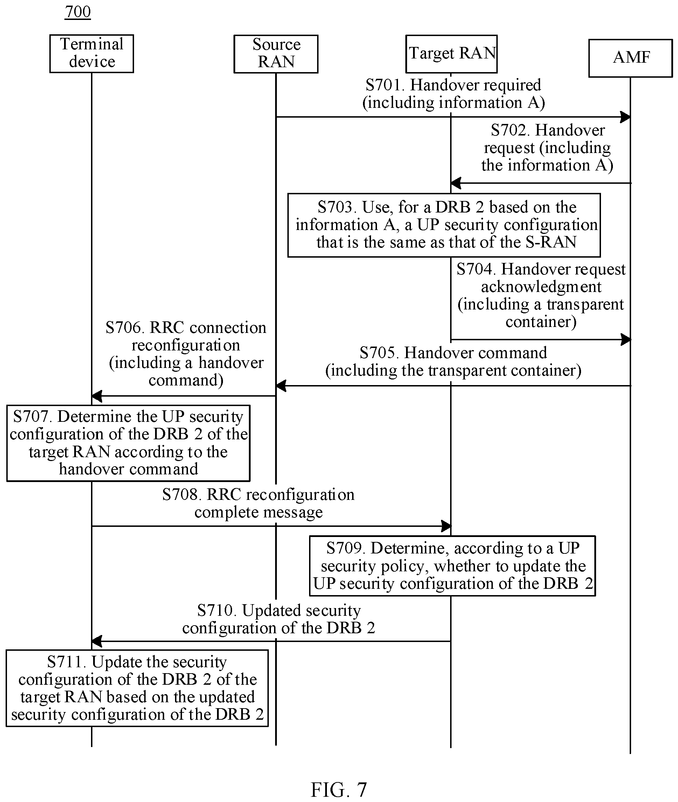

The following further describes an embodiment in which the communication method in this application is applied to an N2 interface-based handover process. FIG. 7 is a schematic flowchart of a security configuration method in an N2 interface-based handover scenario according to an embodiment of this application.

It should be noted that, in the embodiment in FIG. 7, for a part that is the same as or similar to that in the embodiment in FIG. 4, refer to the foregoing description of the embodiment in FIG. 4. For brevity, details are not described herein again.

S701. A source RAN node sends a handover required (handover required) message to an AMF node. The handover required message includes information A.

The handover required message includes a DAPS handover indication indicating a DRB 1 to use a DAPS handover. The information A is the DAPS handover indication or a UP security activation state.

Optionally, when the information A is the UP security activation state, and the source RAN node determines that the DRB 1 uses the DAPS handover, the handover request message includes the UP security activation state, and the UP security activation state indicates a UP security activation state of the DRB 1 or a UP security activation state of a PDU session corresponding to the DRB 1. Alternatively, when the source RAN node determines that the DRB 1 uses the DAPS handover, and a UP security policy of the DRB 1 or a UP security policy of the PDU session corresponding to the DRB 1 indicates that UP security protection is preferred to enable, the handover request message includes the UP security activation state.

After determining to initiate an N2 handover, the source RAN sends a handover required message to the AMF node. The message further includes a list of PDU session resources and a transparent container that needs to be transparently transmitted by the source RAN node to a target RAN node through the AMF node. A list of PDU session resource establishment includes a PDU session ID, a UP security policy corresponding to the PDU session, and the like. However, this application is not limited thereto.

By way of example and not limitation, the list of the PDU session resources or the transparent container includes the information A.

S702. The AMF node sends the handover request message to the target RAN node. The handover request message includes the information A.

After the AMF node interacts with a core network node, the AMF node sends the handover request message to the target RAN node. The handover request message includes the transparent container from the source RAN node and the list of PDU session resource establishment.

S703. The target RAN node determines, based on the information A, that a UP security configuration of a DRB 2 is the same as a UP security configuration of the DRB 1 of the source RAN node.

In an implementation, the information A is a DAPS handover indication, and the target RAN node determines, based on the DAPS handover indication, that the target RAN node uses, for the DRB 2, a UP security configuration that is the same as the UP security configuration of the DRB 1 of the source RAN node.

In another implementation, the information A is the UP security activation state, and the target RAN node determines, based on the UP security activation state, that the UP security configuration of the DRB 2 is the same as the UP security configuration for the DRB 1 of the source RAN node.

S704. The target RAN node sends a handover request acknowledgment message to the AMF node. The handover request acknowledgment message includes the transparent transmission container.

The transparent transmission container in the handover request acknowledgment message is a transparent container for transparent transmission from the target RAN node to the source RAN node. The transparent container indicates a UP security configuration used by the target RAN node for the DRB 2.

By way of example and not limitation, the transparent container may indicate, in Manner 1 (that is, indicating the target RAN node to use, for the DRB 2, the UP security configuration that is the same as that of the DRB 1 of the source RAN node) or Manner 2 (including the UP security configuration for the DRB 2) described in the embodiment of FIG. 4, that the UP security configuration used by the target RAN node for the DRB 2 is the same as the UP security configuration used by the source RAN node for the DRB 1.

The handover request acknowledgment message may further include a list of PDU session resource acknowledgment that indicates a PDU session that accepts to be handed over.

S705. The AMF node sends a handover command to the source RAN node. The handover command includes the transparent container from the target RAN node.

The handover command may further include a list of PDU session resource handover.

S706 to S711 in the embodiment in FIG. 7 sequentially corresponds to S504 to S509 in the embodiment in FIG. 5. For a specific implementation, refer to the foregoing descriptions of S505 to S508 in the embodiment in FIG. 5. For brevity, details are not described herein again.

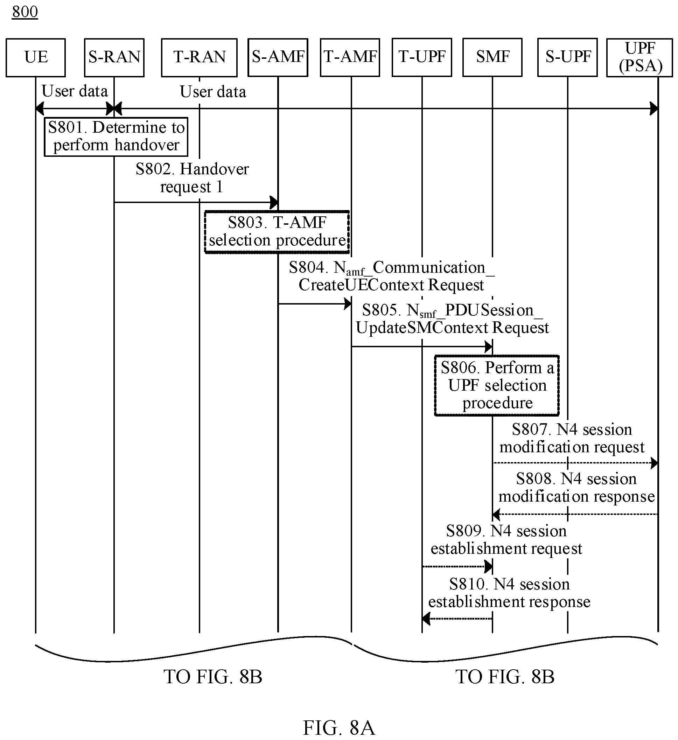

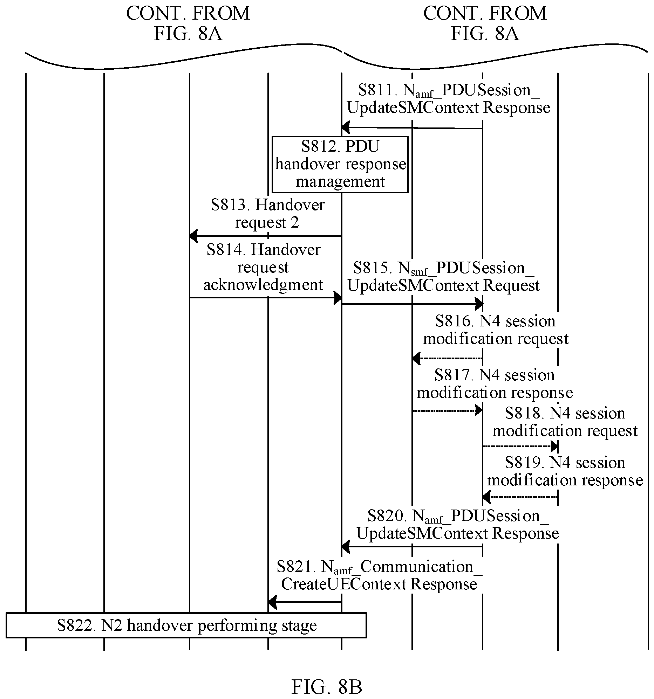

FIG. 8A and FIG. 8B are another schematic flowchart of a security configuration method in an N2 interface-based handover scenario according to an embodiment of this application.

It should be noted that, in the embodiment in FIG. 8A and FIG. 8B, for a part that is the same as or similar to that in the embodiment in FIG. 4 and FIG. 7, refer to the foregoing description of the embodiment in FIG. 4 and FIG. 7. For brevity, details are not described herein again.

In this embodiment, UE establishes a connection to a core network through an S-RAN node, and transmits uplink and downlink data packets. The S-RAN node may determine, based on a measurement report of the UE, to trigger an N2 handover procedure, to hand over the UE to the S-RAN node, and perform UP security configuration of a DRB based on the method provided in this application. This improves data transmission security.

S801. The S-RAN node determines to initiate the N2 handover procedure.

S802. The S-RAN node sends a handover request 1 to a source AMF (source AMF, S-AMF) node.

The handover request 1 message includes a DAPS handover indication indicating a DRB 1 to use a DAPS handover. Information A is the DAPS handover indication or information A includes a UP security activation state of the DRB 1.

Optionally, when the information A includes the UP security activation state, and the source RAN node determines that the DRB 1 uses the DAPS handover, a handover request message includes the UP security activation state, and the UP security activation state indicates the UP security activation state of the DRB 1. Alternatively, when the source RAN node determines that the DRB 1 uses the DAPS handover, and a UP security policy of the DRB 1 or a UP security policy of a PDU session corresponding to the DRB 1 indicates that UP security protection is preferred to enable, the handover request message includes the UP security activation state.

After determining to initiate an N2 handover, the source RAN node sends the handover request 1 message to the S-AMF node. The message further includes a list of PDU session resources and a transparent container that needs to be transparently transmitted by the source RAN node to a target RAN node through the S-AMF node. The list of the PDU session resources includes a PDU session ID, a UP security policy corresponding to the PDU session, and the like. The transparent container may include an RRC container, a list of PDU session resource information, and a target cell identifier. The list of the PDU session resource information includes a PDU session ID, a QoS flow information list, and a mapping list between the DRB and a QoS flow. The mapping list between the DRB and the QoS flow may include a DRB ID and an associated QoS flow list, and optionally, further include DAPS request information, and the like. However, this application is not limited thereto.

By way of example and not limitation, the list of the PDU session resources or the transparent container includes the information A.

S803. If the S-AMF node cannot serve the UE, the S-AMF node performs an AMF node selection procedure, to select a target AMF (target-AMF, T-AMF) node.

S804. If the S-AMF node performs S803, the S-AMF node sends an N_{amf_}Communication_CreateUEContext Request to the T-AMF node.

The N_{amf}_Communication_CreateUEContext Request (N_{amf}_Communication_CreateUEContext Request) includes N2 information and UE context information.

The N2 information includes the target cell identifier and the list of the PDU session resources. The UE context includes a subscription permanent identifier (subscription permanent identifier, SUPI), allowed NSSAI corresponding to the access type, a PDU session identifier, corresponding SMF information, S-NSSAI, a PCF identifier, and a data network name (data network name, DNN).

S805. The T-AMF node sends an N_{smf}_PDUSession_UpdateSMContext Request to the SMF node.

The N_{smf}_PDUSession_UpdateSMContext Request (N_{smf}_PDUSession_UpdateSMContext Request) message includes the PDU session ID, a target cell ID, or a T-RAN ID.

S806. The SMF node determines, based on the target cell ID or the T-RAN ID, whether to allow the N2 handover. The SMF node detects a UPF node selection rule. If the UE moves out of a service area of the UPF node, the SMF node selects a new intermediate UPF node.

S807. The SMF node sends an N4 session modification request message to a PDU session anchor (PDU session anchor) UPF (that is, a UPF (PSA)) node.

If the SMF node selects the new intermediate UPF node, the SMF node performs an N4 session modification procedure, to send the N4 session modification request message to the UPF (PSA) node in the PDU session.

S808. The UPF (PSA) node sends an N4 session modification response message to the SMF node.

S809. The SMF node sends an N4 session establishment request message to a target UPF (target-UPF, T-UPF) node.

The SMF node performs an N4 session establishment procedure with a newly selected T-UPF node, that is, sends an N4 session establishment request message to the T-UPF node.

S810. The T-UPF node sends an N4 session establishment response message to the SMF node.

S811. The SMF node sends an N_{smf}_PDUSession_UpdateSMContext Response (N_{smf}_PDUSession_UpdateSMContext Response) message to the T-AMF node.

If the SMF node accepts a PDU session handover, the message contains an N3 UP address, an uplink (uplink, UL) CN derivation identifier, and a QoS parameter. If the SMF node does not accepts a PDU session handover, the message contains a rejected cause value.

S812. The T-AMF node performs PDU handover response management.

The T-AMF node manages the N_{smf}_PDUSession_UpdateSMContext Response message sent by the SMF-related node. When the T-AMF node receives the N_{smf}_PDUSession_UpdateSMContext Response message sent by all SMF nodes or a maximum waiting time of the T-AMF node expires, the T-AMF continues to perform the N2 handover procedure.

S813. The T-AMF node sends a handover request 2 to the T-RAN node.

The handover request 2 message includes N2 mobility management (mobility management, MM) information, N2 SM information, and a transparent container that is transparently transmitted by the S-RAN node to the target RAN node. The transparent container includes the information A, a handover restriction list, and a PDU session rejected list.

The T-RAN node determines, based on the information A, that a UP security configuration of a DRB 2 of the T-RAN node is the same as the UP security configuration of the DRB 1 of the source RAN node. For this step, refer to the foregoing description in S703 in the embodiment in FIG. 7. For brevity, details are not described herein again.

S814. The T-RAN node sends a handover request acknowledgment message to the T-AMF node.

The handover request acknowledgment message includes the transparent container from the T-RAN node to the S-RAN node, and the transparent container indicates the UP security configuration used by the target RAN node for the DRB 2. For the specific indication method, refer to the above description. For brevity, details are not described herein again.

The handover request acknowledgment message further includes an N2 SM response list, a failed PDU session list, and an SM N3 transmission information list of the T-RAN node.

S815. The T-AMF node sends the N_{smf}_PDUSession_UpdateSMContext Request message to the SMF node.

This message contains the PDU session identifier, an N2 SM response, and a T-RAN SM N3 transmission information list. For each N2 SM response, the T-AMF node sends the N2 SM response to the SMF node. If there is no new intermediate UPF node, the SMF node stores N3 tunnel information.

S816. If the SMF node selects a new intermediate UPF node in S806, the SMF node sends the N4 session modification request message to the T-UPF node.

The N4 session modification request message includes a T-RAN SM N3 forwarding information list, and an indication for optionally allocating a downlink (downlink, DL) forwarding tunnel.

S817. The T-UPF node sends the N4 session modification response message to the SMF node.

The N4 session modification response message includes an SM N3 forwarding information list.

S818. The SMF node sends the N4 session modification request message to a source UPF (source UPF, S-UPF) node.

The N4 session modification request message includes the T-RAN SM N3 forwarding information list or a T-UPF SM N3 forwarding information list, and an indication of the DL forwarding tunnel.

S819. The S-UPF node sends the N4 session modification response message to the SMF node.

The N4 session modification response message includes an S-UPF SM N3 forwarding information list.

S820. The SMF node sends, to the T-AMF node, an N_{smf}_PDUSession_UpdateSMContext Response message including the N2 SM information.

S821. The T-AMF node sends an N_{amf}_Communication_CreateUEContext Response message to the S-AMF node.

This message contains the N2 information, a list of failed PDU session establishment, and the N2 SM information.

S822. N2 handover performing stage.

After receiving a handover acknowledgment message of the UE, the T-RAN node determines, according to the UP security policy, whether to update a UP security activation state of the PDU session of which the DAPS is activated.

For the DRB on which DAPS handover is performed, for example, the DRB 2, the T-RAN node may determine, according to the UP security policy of the PDU session corresponding to the DRB 2, a UP security activation state 2. If a current UP security activation state 1 in the PDU session is different, the T-RAN node determines to update the UP security configuration of the DRB 2. The T-RAN node determines, based on the UP security activation state 2, a UP security configuration used for the DRB 2, that is, an updated UP security configuration (if the current UP security configuration of the DRB 1 is a UP security configuration 1, the updated UP security configuration may be a UP security configuration 2).

Optionally, the UP security activation indication is carried in a resource release message and sent to the terminal device, or the UP security activation indication may be carried in another RRC message sent by the T-RAN node to the terminal device. The UP security activation indication indicates the UP security configuration 2, that is, the updated security configuration of the DRB 2.

After receiving the UP security activation indication, the terminal device updates the UP security configuration of the DRB 2 based on the UP security activation indication.

Optionally, in an alternative solution in which the UP security activation indication is carried in the resource release message to notify the terminal device to update the UP security configuration, the T-RAN node may trigger an intra-RAN (intra-RAN) handover procedure, so that the terminal device updates the security configuration of the DRB 2.

According to the solution provided in this embodiment of this application, the target RAN node uses, for the DRB, the user plane security configuration that is the same as that of the DRB of the source RAN node. This can reduce a data security potential risk when the target RAN node and the source RAN node transmit a same data packet, and improve data transmission security.

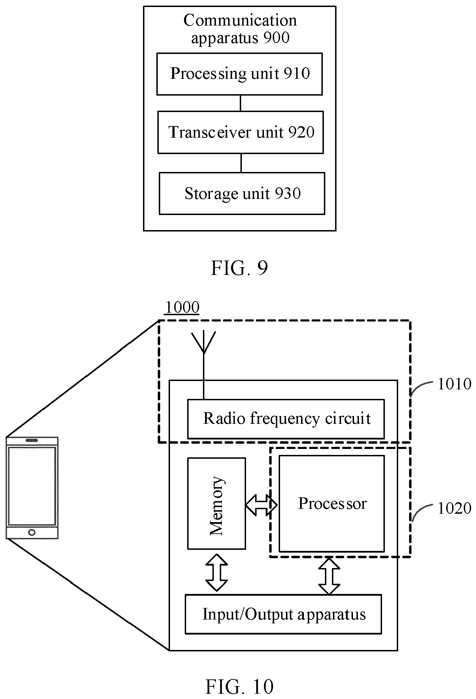

The method provided in embodiments of this application is described above in detail with reference to FIG. 4 to FIG. 8A and FIG. 8B. Apparatuses provided in embodiments of this application are described below in detail with reference to FIG. 9 to FIG. 12. To implement functions in the method provided in the foregoing embodiments of this application, each network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 9 is a schematic block diagram of a communication apparatus according to an embodiment of this application. As shown in FIG. 9, a communication apparatus 900 may include a transceiver unit 920.

In a possible design, the communication apparatus 900 may correspond to the terminal device in the foregoing method embodiments, or may be a chip configured (or used) in the terminal device, or may be another apparatus, module, circuit, unit, or the like that can implement a method performed by the terminal device.

It should be understood that the communication apparatus 900 may correspond to the terminal device in methods 400 to 800 according to embodiments of this application. The communication apparatus 900 may include units configured to perform the method performed by the terminal device in the methods 400 to 800 in FIG. 4 to FIG. 8A and FIG. 8B. In addition, the units in the communication apparatus 900 and the foregoing other operations and/or functions are separately intended to implement the corresponding procedures in the methods 400 to 800 in FIG. 4 to FIG. 8A and FIG. 8B.

Optionally, the communication apparatus 900 may further include a processing unit 910. The processing unit 910 may be configured to process instructions or data, to implement a corresponding operation.

It should be further understood that when the communication apparatus 900 is the chip configured (or used) in the terminal device, a transceiver unit 920 in the communication apparatus 900 may be an input/output interface or circuit in the chip, and the processing unit 910 in the communication apparatus 900 may be a processor in the chip.

Optionally, the communication apparatus 900 may further include a storage unit 930. The storage unit 930 may be configured to store instructions or data. The processing unit 910 may execute the instructions or the data stored in the storage unit, to enable the communication apparatus to implement the corresponding operation.

It should be understood that the transceiver unit 920 in the communication apparatus 900 may be implemented through a communication interface (for example, the transceiver or the input/output interface), for example, may correspond to a transceiver 1010 in a terminal device 1000 in FIG. 10. The processing unit 910 in the communication apparatus 900 may be implemented by at least one processor, for example, may correspond to a processor 1020 in the terminal device 1000 in FIG. 10. The processing unit 910 in the communication apparatus 900 may further be implemented by using at least one logic circuit. The storage unit 930 in the communication apparatus 900 may correspond to a memory in the terminal device 1000 in FIG. 10.

It should be further understood that a specific process in which the units perform the foregoing corresponding steps is described in detail in the foregoing method embodiments. For brevity, details are not described herein.

In a possible design, the communication apparatus 900 may correspond to the access network device in the foregoing method embodiments, for example, or may be a chip configured (or used) in an access network node, or may be another apparatus, module, circuit, unit, or the like that can implement a method performed by the access network node.

It should be understood that the communication apparatus 900 may correspond to a source RAN node or a target RAN node in the methods 400 to 800 according to embodiments of this application. The communication apparatus 900 may include units configured to perform the methods performed by the source RAN node or the target RAN node in the methods 400 to 800 in FIG. 4 to FIG. 8A and FIG. 8B. In addition, the units in the communication apparatus 900 and the foregoing other operations and/or functions are separately intended to implement the corresponding procedures in the methods 400 to 800 in FIG. 4 to FIG. 8A and FIG. 8B.

Optionally, the communication apparatus 900 may further include the processing unit 910. The processing unit 910 may be configured to process the instructions or the data, to implement the corresponding operation.

It should be further understood that when the communication apparatus 900 is the chip configured (or used) in the access network device, the transceiver unit 920 in the communication apparatus 900 may be the input/output interface or the circuit in the chip, and the processing unit 910 in the communication apparatus 900 may be the processor in the chip.

Optionally, the communication apparatus 900 may further include the storage unit 930. The storage unit 930 may be configured to store the instructions or the data. The processing unit 910 may execute the instructions or the data stored in the storage unit, to enable the communication apparatus to implement the corresponding operation.

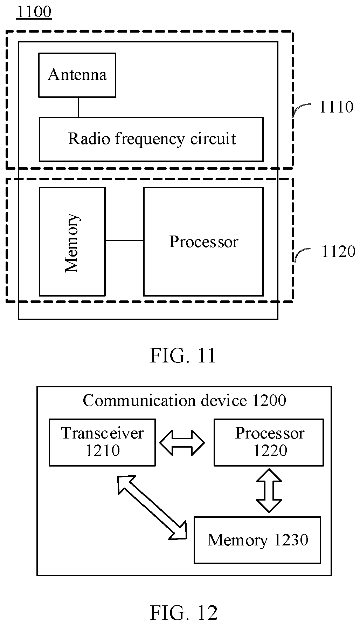

It should be understood that when the communication apparatus 900 is the access network device, the transceiver unit 920 in the communication apparatus 900 may be implemented through the communication interface (for example, the transceiver or the input/output interface), for example, may correspond to a transceiver 1110 in an access network device 1100 in FIG. 11. The processing unit 910 in the communication apparatus 900 may be implemented by using at least one processor, for example, may correspond to a processor 1120 in an access network device 1100 in FIG. 11. The processing unit 910 in the communication apparatus 900 may be implemented by using at least one logic circuit.

It should be further understood that a specific process in which the units perform the foregoing corresponding steps is described in detail in the foregoing method embodiments. For brevity, details are not described herein.

In a possible design, the communication apparatus 900 may correspond to an AMF node in the foregoing method embodiments, for example, or may be a chip configured (or used) in the AMF node, or may be another apparatus, module, circuit, unit, or the like that can implement a method performed by the AMF node.

It should be understood that the communication apparatus 900 may correspond to the AMF node in the methods 400 to 800 according to embodiments of this application, and the communication apparatus 900 may include units configured to perform the methods performed by the AMF node in the methods 400 to 800 in FIG. 4 to FIG. 8A and FIG. 8B. In addition, the units in the communication apparatus 900 and the foregoing other operations and/or functions are separately intended to implement the corresponding procedures in the methods 400 to 800 in FIG. 4 to FIG. 8A and FIG. 8B.

Optionally, the communication apparatus 900 may further include the processing unit 910. The processing unit 910 may be configured to process the instructions or the data, to implement the corresponding operation.

It should be further understood that when the communication apparatus 900 is the chip configured (or used) in the AMF, the transceiver unit 920 in the communication apparatus 900 may be the input/output interface or the circuit in the chip, and the processing unit 910 in the communication apparatus 900 may be the processor in the chip.

Optionally, the communication apparatus 900 may further include the storage unit 930. The storage unit 930 may be configured to store the instructions or the data. The processing unit 910 may execute the instructions or the data stored in the storage unit, to enable the communication apparatus to implement the corresponding operation.

It should be understood that when the communication apparatus 900 is the AMF node, the transceiver unit 920 in the communication apparatus 900 may be implemented through the communication interface (for example, the transceiver or the input/output interface), for example, may correspond to a transceiver 1210 in an AMF node 1200 in FIG. 12. The processing unit 910 in the communication apparatus 900 may be implemented by using at least one processor, for example, may correspond to a processor 1220 in the AMF node 1200 in FIG. 12. The processing unit 910 in the communication apparatus 900 may be implemented by using at least one logic circuit.

It should be further understood that a specific process in which the units perform the foregoing corresponding steps is described in detail in the foregoing method embodiments. For brevity, details are not described herein.

FIG. 10 is a schematic diagram of a structure of a terminal device 1000 according to an embodiment of this application. The terminal device 1000 may be used in the system in FIG. 1, to perform the functions of the terminal device in the foregoing method embodiments. As shown in the figure, the terminal device 1000 includes a processor 1020 and a transceiver 1010. Optionally, the terminal device 1000 further includes a memory. The processor 1020, the transceiver 1010, and the memory may communicate with each other through an internal connection path, to transfer and control and/or a data signal. The memory is configured to store a computer program, and the processor 1020 is configured to execute the computer program in the memory, to control the transceiver 1010 to receive and send signals.

The processor 1020 and the memory may be integrated into one processing apparatus. The processor 1020 is configured to execute program code stored in the memory to implement the foregoing functions. During specific implementation, the memory may further be integrated into the processor 1020, or may be independent of the processor 1020. The processor 1020 may correspond to the processing unit in FIG. 9.

The transceiver 1010 may correspond to the transceiver unit in FIG. 9. The transceiver 1010 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that, the terminal device 1000 in FIG. 10 can implement processes related to the terminal device in the method embodiments in FIG. 4 to FIG. 8A and FIG. 8B. The operations and/or the functions of the modules in the terminal device 1000 are separately intended to implement corresponding procedures in the foregoing method embodiments. For details, refer to the descriptions in the foregoing method embodiments. To avoid repetition, detailed descriptions are properly omitted herein.

The processor 1020 may be configured to perform an action that is implemented inside the terminal device and that is described in the foregoing method embodiments. The transceiver 1010 may be configured to perform a sending action by the terminal device to a network device or a receiving action from the network device in the foregoing method embodiments. For details, refer to the descriptions in the foregoing method embodiments. Details are not described herein again.

Optionally, the terminal device 1000 may further include a power supply, configured to supply power to various components or circuits in the terminal device.

In addition, to make functions of the terminal device more perfect, the terminal device 1000 may further include an input/output apparatus, for example, include one or more of an input unit, a display unit, an audio circuit, a camera, a sensor, and the like, and the audio circuit may further include a speaker, a microphone, and the like.

FIG. 11 is a schematic diagram of a structure of a network device according to an embodiment of this application. A network device 1100 may be applied to the system in FIG. 1, to perform a function of an access network node (for example, a source RAN node or a target RAN node) in the foregoing method embodiments.

It should be understood that the network device 1100 in FIG. 11 can implement processes of the source RAN node or the target RAN node in the method embodiments in FIG. 4 to FIG. 8A and FIG. 8B. Operations and/or functions of the modules in the network device 1100 are separately intended to implement corresponding procedures in the foregoing method embodiments. For details, refer to the descriptions in the foregoing method embodiments. To avoid repetition, detailed descriptions are properly omitted herein.

It should be understood that the network device 1100 in FIG. 11 may be an eNB or a gNB. Optionally, the network device includes a network device of a central unit (central unit, CU), a distributed unit (distributed unit, DU), an active antenna unit (active antenna unit, AAU), and the like. Optionally, the CU may be specifically classified into a CU-CP and a CU-UP. A specific architecture of the network device is not limited in this application.

It should be understood that the network device 1100 in FIG. 11 may be a CU node or a CU-CP node.

FIG. 12 is a schematic diagram of a structure of a communication device 1200 according to an embodiment of this application. The network device 1200 may be used in the system in FIG. 1, to perform functions of the AMF node in the foregoing method embodiments. The communication device 1200 may include a transceiver 1210, a processor 1220, and a memory 1230.

It should be understood that the communication device 1200 in FIG. 12 can implement the processes of the AMF node in the method embodiments in FIG. 4 to FIG. 8A and FIG. 8B. Operations and/or functions of the modules in the communication device 1200 are separately intended to implement corresponding procedures in the foregoing method embodiments. For details, refer to the descriptions in the foregoing method embodiments. To avoid repetition, detailed descriptions are properly omitted herein.

This embodiment of this application further provides a processing apparatus, including a processor and a (communication) interface. The processor is configured to perform the method according to any one of the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

According to the methods provided in embodiments of this application, this application further provides a computer program product. The computer program product includes computer program code. When the computer program code is executed by one or more processors, an apparatus including the processor is enabled to perform the methods in embodiments in FIG. 4 to FIG. 8A and FIG. 8B.

All or a part of the technical solutions provided in embodiments of this application may be implemented by using software, hardware, firmware, or any combination thereof. When software is used for implementation, all or a part of embodiments may be implemented in a form of the computer program product. The computer program product includes one or more computer instructions. When computer program instructions are loaded and executed on a computer, the procedure or functions according to embodiments of this application are all or partially generated. The computer may be a general-purpose computer, a dedicated computer, a computer network, a network device, a terminal device, a core network device, a machine learning device, or another programmable apparatus. The computer instructions may be stored in a computer-readable storage medium or may be transmitted from a computer-readable storage medium to another computer-readable storage medium. For example, the computer instructions may be transmitted from a website site, computer, server, or data center to another website site, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as the server, the data center, or the like, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

According to the methods provided in embodiments of this application, this application further provides the computer-readable storage medium. The computer-readable storage medium stores program code. When the program code is executed by one or more processors, an apparatus including the processor is enabled to perform the methods in embodiments in FIG. 4 to FIG. 8A and FIG. 8B.

According to the methods provided in embodiments of this application, this application further provides a system, including the foregoing one or more network devices. The system may further include the foregoing one or more terminal devices.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part of or all of the units may be selected based on actual requirements to achieve a purpose of the solutions of embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A security configuration method in a handover scenario, comprising:
receiving, by a target access network node, a first message, wherein the first message indicates a terminal device to be handed over from a source access network node to the target access network node, the first message comprises first information, and the first information indicates to use a user plane security configuration that is of a data radio bearer and that is the same as that of a data radio bearer of the source access network node; and
sending, by the target access network node, a response message of the first message, wherein the response message comprises second information, the second information indicates a user plane security configuration of a second data radio bearer of the target access network node, and the user plane security configuration of the second data radio bearer of the target access network node is the same as a user plane security configuration of a first data radio bearer of the source access node.

2. The method according to claim 1, wherein the second data radio bearer is a data radio bearer obtained after the first data radio bearer is handed over from the source access network node to the target access network node.

3. The method according to claim 1 or 2, wherein the first information comprises identification information and a dual active protocol stack handover indication of the first data radio bearer, and the dual active protocol stack handover indication indicates the first data radio bearer to use dual active protocol stack handover.

4. The method according to claim 3, wherein the first message comprises the user plane security configuration of the first data radio bearer, and the method further comprises:
determining, by the target access network node based on the dual active protocol stack handover indication, that the user plane security configuration of the second data radio bearer is the same as the user plane security configuration of the first data radio bearer; and
configuring, by the target access network node based on the user plane security configuration of the first data radio bearer, user plane security of the second data radio bearer, or configuring user plane security of a data radio bearer in a protocol data unit session corresponding to the second data radio bearer.

5. The method according to claim 1 or 2, wherein the first information comprises a user plane security activation state, and the user plane security activation state indicates a user plane security activation state of the first data radio bearer or a user plane security activation state of a protocol data unit session corresponding to the first data radio bearer.

6. The method according to claim 5, wherein the method further comprises:
determining, by the target access network node, the user plane security configuration of the second data radio bearer based on the user plane security activation state.

7. The method according to claim 6, wherein the first message comprises the user plane security configuration of the first data radio bearer, and the method further comprises:
comparing, by the target access network node, the user plane security configuration of the second data radio bearer with the user plane security configuration of the first data radio bearer, wherein
if a comparison result is that the user plane security configuration of the second data radio bearer is different from the user plane security configuration of the first data radio bearer, the second information comprises the user plane security configuration of the second data radio bearer; or
if a comparison result is that the user plane security configuration of the second data radio bearer is the same as the user plane security configuration of the first data radio bearer, the second information indicates to use, for the second data radio bearer, a user plane security configuration that is the same as that of the first data radio bearer.

8. The method according to any one of claims 1 to 7, wherein the first message comprises a first user plane security policy, and the first user plane security policy is a user plane security policy of the first data radio bearer, or the first user plane security policy is a user plane security policy of the protocol data unit session corresponding to the first data radio bearer.

9. The method according to claim 8, wherein the first user plane security policy indicates that security protection is recommended to be used.

10. The method according to any one of claims 1 to 9, wherein
the second information indicates to use, for the second data radio bearer of the target access network node, the user plane security configuration that is the same as that of the first data radio bearer of the source access network node; or
the second information comprises the user plane security configuration of the second data radio bearer.

11. The method according to any one of claims 1 to 10, wherein the method further comprises:
after the target access network node receives a radio resource control reconfiguration complete message from the terminal device, updating, by the target access network node, the user plane security configuration of the second data radio bearer according to a second user plane security policy, wherein the second user plane security policy is a user plane security policy of the second data radio bearer of the target access network node or a user plane security policy of the protocol data unit session corresponding to the second data radio bearer.

12. The method according to any one of claims 1 to 11, wherein the method further comprises:
sending, by the target access network node, an updated user plane security configuration of the second data radio bearer of the target access network node to the terminal device.

13. The method according to claim 12, wherein the updated user plane security configuration is carried in a resource release message.

14. The method according to any one of claims 1 to 13, wherein
the first message is from the source access network node, and the sending, by the target access network node, a response message comprises: sending, by the target access network node, the response message to the source access network node; or
the first message is from a core network node, and the sending, by the target access network node, a response message comprises: sending, by the target access network node, the response message to the core network node.

15. A security configuration method in a handover scenario, comprising:
sending, by a source access network node, a first message, wherein the first message indicates a terminal device to be handed over from the source access network node to a target access network node, the first message comprises first information, and the first information indicates to use a user plane security configuration that is of a data radio bearer and that is the same as that of a data radio bearer of the source access network node; and
receiving, by the source access network node, a response message of the first message, wherein the response message comprises second information, the second information indicates a user plane security configuration of a second data radio bearer of the target access network node, and the user plane security configuration of the second data radio bearer of the target access network node is the same as a user plane security configuration of a first data radio bearer of the source access node.

16. The method according to claim 15, wherein the second data radio bearer is a data radio bearer obtained after the first data radio bearer is handed over from the source access network node to the target access network node.

17. The method according to claim 15 or 16, wherein the method further comprises:
sending, by the source access network node, a second message to the terminal device, wherein the second message indicates the terminal device to be handed over from the source access network node to the target access network node, and the second message comprises the second information.

18. The method according to any one of claims 15 to 17, wherein the first information comprises identification information and a dual active protocol stack handover indication of the first data radio bearer, and the dual active protocol stack handover indication indicates the first data radio bearer to use dual active protocol stack handover.

19. The method according to any one of claims 15 to 17, wherein the first information comprises a user plane security activation state, and the user plane security activation state indicates a user plane security activation state of the first data radio bearer or a user plane security activation state of a protocol data unit session corresponding to the first data radio bearer.

20. The method according to claim 19, wherein the method further comprises:
when it is determined that the first data radio bearer uses the dual active protocol stack handover, determining, by the source access network node, that the first message comprises the first information.

21. The method according to any one of claims 15 to 20, wherein the first message comprises the user plane security configuration of the first data radio bearer, and/or the first message comprises a first user plane security policy, wherein the first user plane security policy is a user plane security policy of the first data radio bearer or a user plane security policy of the protocol data unit session corresponding to the first data radio bearer.

22. The method according to claim 21, wherein the first user plane security policy indicates that security protection is recommended to be used.

23. The method according to any one of claims 15 to 22, wherein the method further comprises:
when the first user plane security policy indicates that the security protection is recommended to be used, determining, by the source access network node, that the first message comprises the first information, wherein the first user plane security policy is the user plane security policy of the first data radio bearer or the user plane security policy of the protocol data unit session corresponding to the first data radio bearer.

24. The method according to any one of claims 15 to 23, wherein
the second information indicates to use, for the second data radio bearer of the target access network node, a user plane security configuration that is the same as that of the first data radio bearer of the source access network node; or
the second information comprises the user plane security configuration of the second data radio bearer.

25. The method according to any one of claims 15 to 24, wherein
the response message is from the target access network node, and the sending, by a source access network node, a first message comprises: sending, by the source access network node, the first message to the target access network node; or
the response message is from a core network node, and the sending, by a source access network node, a first message comprises: sending, by the source access network node, the first message to the core network node.

26. A security configuration method in a handover scenario, comprising:
receiving, by a terminal device, a radio resource configuration message from a source access network device, wherein the radio resource configuration message comprises second information, the second information indicates a user plane security configuration of a second data radio bearer of a target access network node, and the user plane security configuration of the second data radio bearer is the same as a user plane security configuration of a first data radio bearer of the source access node; and
receiving, by the terminal device, a resource release message from the target access network node, wherein the resource release message comprises third information, and the third information indicates an updated user plane security configuration of the second data radio bearer of the target access network node.

27. The method according to claim 26, wherein the second information indicates to use, for the second data radio bearer of the target access network node, a user plane security configuration that is the same as that of the first data radio bearer of the source access network node; or
the second information comprises the user plane security configuration of the second data radio bearer.

28. A communication apparatus, comprising a processor and a memory, wherein the memory is coupled to the processor, and the processor is configured to perform the method according to any one of claims 1 to 14.

29. A communication apparatus, comprising a processor and a memory, wherein the memory is coupled to the processor, and the processor is configured to perform the method according to any one of claims 15 to 25.

30. A communication apparatus, comprising a processor and a memory, wherein the memory is coupled to the processor, and the processor is configured to perform the method according to claim 26 or 27.

31. The apparatus according to claim 30, wherein the communication apparatus is configured in a terminal device, or the communication apparatus is a terminal device.

32. A computer-readable storage medium, comprising a computer program, wherein when the computer program is run on a computer, the computer is enabled to perform the method according to any one of claims 1 to 27.

33. A chip, comprising at least one processor and a communication interface, wherein the processor performs the method according to any one of claims 1 to 27 through the communication interface.

34. A computer program product, wherein the computer program product comprises a computer program, and when the computer program is run, a computer is enabled to perform the method according to any one of claims 1 to 27.

35. A program product, wherein the program product comprises a computer program, the computer program is stored in a readable storage medium, at least one processor of a communication apparatus may read the computer program from the readable storage medium, and the at least one processor executes the computer program, to enable the communication apparatus to perform the method according to any one of claims 1 to 14, the method according to any one of claims 15 to 25, or the method according to claim 26 or 27.
